(19) **Europäisches Patentamt**
**European Patent Office**
**Office européen des brevets**

(11) **EP 2 367 187 A2**

(12) **EUROPEAN PATENT APPLICATION**

(43) Date of publication:
**21.09.2011 Bulletin 2011/38**

(51) Int Cl.:
***H01G 9/20*** *(2006.01)*

(21) Application number: **11153535.7**

(22) Date of filing: **07.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.03.2010 JP 2010060887**
**07.10.2010 JP 2010227152**

(71) Applicant: **Sony Corporation**
**Tokyo 108-0075 (JP)**

(72) Inventors:
• **Morooka, Masahiro**
**Minato-ku Tokyo 108-0075 (JP)**
• **Shimura, Jusuke**
**Minato-ku Tokyo 108-0075 (JP)**
• **Yoneya, Reiko**
**Minato-ku Tokyo 108-0075 (JP)**
• **Tada, Keishi**
**Minato-ku Tokyo 108-0075 (JP)**

(74) Representative: **Turner, James Arthur**
**D Young & Co LLP**
**120 Holborn**
**London EC1N 2DY (GB)**

(54) **Photoelectric conversion device**

(57) Photoelectric conversion elements suitable for various applications and related components, and methods associated therewith, are described. A photoelectric conversion element may include a catalyst layer having at least two portions that are spaced from one another, and a current collector having a tip portion that extends toward or within the space between portions of the catalyst layer. A photoelectric conversion element may also include a semiconductor layer disposed a distance of between about 5 microns and about 20 microns away from the catalyst layer.

# FIG.1A

**Description**

The present invention relates to a photoelectric conversion device.

In recent years, consciousness of environmental protection has been raised, and the importance of photovoltaic power generation has been increasing considerably. A dye-sensitized solar cell (DSSC) has a configuration in which a transparent conductor layer and an oxide semiconductor layer composed of an oxide semiconductor with a photosensitizing dye supported thereon are sequentially formed over a transparent base member (first substrate), the oxide semiconductor layer is made to serve as a working electrode (photoelectrode, or window electrode), and an oxidation-reduction electrolyte layer is disposed between the oxide semiconductor layer and a counter electrode formed on a counter base member (second substrate). In such a dye-sensitized solar cell, electrons excited in the dye by sunlight are injected into the oxide semiconductor layer, and current flows from the transparent conductor layer to the counter electrode through an external circuit including a load, whereby a function as a cell is attained.

As compared with silicon solar cells, the dye-sensitized solar cells (DSSCs) are advantageous in that the raw materials necessary for manufacturing the DSSCs are less limited in resources, and the DSSCs can be manufactured by a printing system or a flow production system, without need for a vacuum equipment and, hence, at low manufacturing cost and equipment cost.

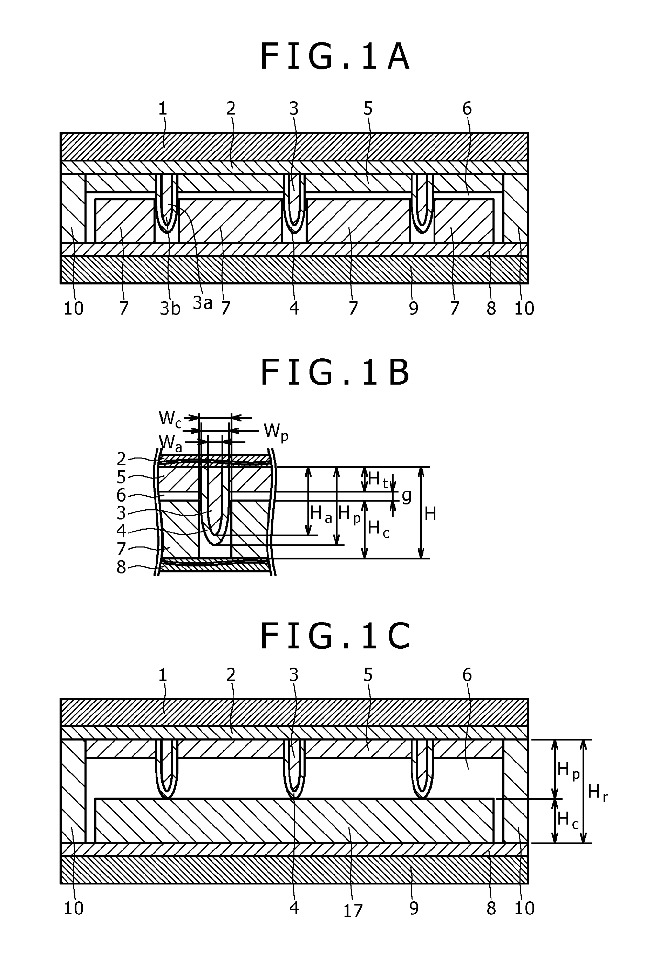

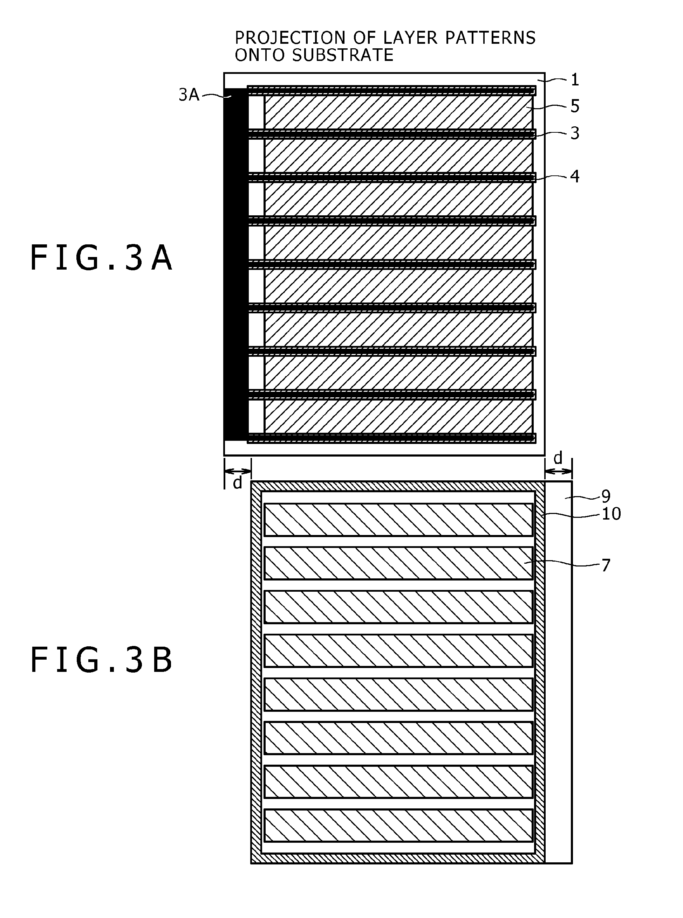

As the dye-sensitized solar cell, those with a variety of structures have been proposed. For instance, a dye-sensitized solar cell having a structure in which an oxide semiconductor layer composed of an oxide semiconductor (such as titanium oxide) with a photosensitizing dye supported thereon and a current collector (current collection wiring layer) provided with a protective layer thereon are formed over a transparent substrate provided thereon with a transparent conductor layer of ITO (indium-doped tin oxide), FTO (fluorine-doped tin oxide) or the like, and in which an oxidation-reduction electrolyte layer is disposed between the oxide semiconductor layer and a counter electrode opposed thereto is known from Japanese Patent Laid-open No. 2005-142089 (paragraphs 0056-0057, FIG. 1), Japanese Patent Laid-open No. 2006-92854 (paragraphs 0022-0025, FIG. 1), Japanese Patent Laid-open No. 2007-280906 (paragraphs 0033-0037, FIG. 1), and Japanese Patent Laid-open No. 2009-277624 (paragraphs 0015-0017 and 0042, FIGS. 1 and 3).

In addition, a dye-sensitized solar cell having a structure in which the distance between the oxide semiconductor layer and the counter electrode is reduced is known from Japanese Patent Laid-open No. 2005-346971 (paragraphs 0006-0019, FIG. 1) and Japanese Patent Laid-open No. 2009-9866 (paragraphs 0015-0020, FIG. 1).

Meanwhile, the oxide semiconductor layer in a dye-sensitized solar cell as a photoelectric conversion device is often so provided as to cover a transparent conductor layer formed on a transparent substrate such as a glass substrate. However, since the transparent conductor layer is required to have transparency, a certain limitation is imposed on lowering of electrical resistance. Therefore, as the dye-sensitized solar cell is enlarged in area, efficient collection of the electrons generated by photoelectric conversion in the oxide semiconductor layer becomes more difficult to achieve. As a countermeasure against this problem, there has been adopted the method of lowering the electric resistance by providing the current collector (current collection wiring layer) at the transparent conductor layer, as above-mentioned.

In order to reduce the resistance loss due to the transparent conductor layer and thereby to lower the electric resistance, it suffices to enlarge the width of the current collector or to increase the height (thickness) of the current collector. If the width of the current collector is enlarged, however, the area of the oxide semiconductor layer would be reduced, and the conversion efficiency per unit area would be lowered. On the other hand, if the height of the current collector is increased, the distance between the oxide semiconductor layer and the counter electrode, or the thickness of the electrolyte layer, would be enlarged. This would result in that the transfer speed of ions is lowered, and the conversion efficiency is lowered because of the resistance loss due to the electrode layer.

Although a dye-sensitized solar cell having a structure in which the distance between the oxide semiconductor layer and the counter electrode is reduced has been disclosed in Japanese Patent Laid-open Nos. 2005-346971 and 2009-9866 as above-mentioned, this dye-sensitized solar cell is complicated in structure.

Thus, there is a need for a photoelectric conversion device which is simple in structure and which can exhibit enhanced conversion efficiency.

Various respective aspects and features of the invention are defined in the appended claims. Combinations of features from the dependent claims may be combined with features of the independent claims as appropriate and not merely as explicitly set out in the claims.

In embodiments of the photoelectric conversion device that pertain to the present invention, the tip portion of the current collector extends toward that part of the second base member over which the catalyst layer is not provided, or the tip portion extends into the recess formed in the catalyst layer. Therefore, notwithstanding the simple structure, the height (thickness) of the current collector can be increased and, as a result, current collection efficiency can be enhanced. Moreover, the distance between the oxide semiconductor layer and the catalyst layer can be shortened, so that conversion efficiency can be enhanced even in the case where an electrolyte solution having a high electric resistance is used to form the electrolyte layer. In some cases, the distance between the oxide semiconductor layer and the catalyst layer may be between about 5 microns and about 40 microns, between about 5 microns and about 20 microns, or between about 9 microns and about 16 microns.

Furthermore, the current collector can be disposed in conditions as to minimize the resistance loss due to the transparent conductor layer, and conversion efficiency can be thereby enhanced. Besides, in the case of forming the electrolyte layer by use of an electrolyte solution, the electrolyte solution can be speedily poured into the gap between the oxide semiconductor layer and the catalyst layer, along the tip of the current collector.

In some embodiments, a photoelectric conversion element is provided including a catalyst layer having at least a first portion and a second portion. The first portion of the catalyst layer is spaced from the second portion of the catalyst layer. The photoelectric conversion element includes a current collector having a tip portion extending toward or within a space between the first and second portions of the catalyst layer.

In some embodiments, a photoelectric conversion element is provided including a catalyst layer and a semiconductor layer disposed a distance from the catalyst layer ranging between about 5 microns and about 20 microns.

Embodiments of the invention will now be described with reference to the accompanying drawings, throughout which like parts are referred to by like references, and in which:

FIGS. 1A, 1B, and 1C are respectively a schematic partial sectional view of a photoelectric conversion device according to Example 1 of the present invention, an enlarged schematic partial sectional view of a part of the photoelectric conversion device of Example 1, and a schematic partial sectional view of a photoelectric conversion device according to Comparative Example 1A;

FIG. 2 is a schematic plan view of the photoelectric conversion device of Example 1;

FIGS. 3A and 3B are projection views obtained by projection of formation patterns of layers constituting the photoelectric conversion device of Example 1;

FIGS. 4A, 4B, and 4C are respectively a sectional view taken along line X-X of FIG. 2 (X-X sectional view), a sectional view taken along line Y-Y of FIG. 2 (Y-Y sectional view), and a sectional view taken along line W-W of FIG. 2 (W-W sectional view);

FIG. 5 shows the formation pattern of oxide semiconductor layers in the photoelectric conversion device of Example 1;

FIG. 6 shows the formation pattern of catalyst layers in the photoelectric conversion device of Example 1;

FIG. 7 shows the formation pattern of current collectors in the photoelectric conversion device of Example 1;

FIG. 8 shows the formation pattern of protective layers in the photoelectric conversion device of Example 1;

FIG. 9 shows the formation pattern of a sealing layer in the photoelectric conversion device of Example 1;

FIGS. 10A and 10B show schematic plan views of components at a part of the photoelectric conversion device of Example 1;

FIG. 11 is a schematic plan view of the photoelectric conversion device of Example 1;

FIGS. 12A and 12B respectively show the condition in which electrons flow in the photoelectric conversion device of Example 1, and the condition in which electrons flow in a photoelectric conversion device having a Z-type module according to Comparative Example 1B;

FIGS. 13A, 13B, and 13C are respectively a schematic partial sectional view of a unit structure in the photoelectric conversion device of Example 1, an equivalent circuit diagram for the unit structure, and a schematic partial sectional view for illustrating extension of the description of the unit structure to the whole part of the photoelectric conversion device;

FIGS. 14A and 14B are graphs respectively showing the relations between the width of the oxide semiconductor layer and the output in the photoelectric conversion devices of Example 1 and Comparative Example 1B;

FIGS. 15A and 15B are graphs respectively showing the measurement results of open circuit voltage $V_{oc}$ and short-circuit current density $J_{SC}$, obtained by varying the distance between the oxide semiconductor layer and the catalyst layer, in the photoelectric conversion device according to Example 2;

FIGS. 16A and 16B are graphs respectively showing the measurement results of fill factor FF and internal resistance $R_s$, obtained by varying the distance between the oxide semiconductor layer and the catalyst layer, in the photoelectric conversion device of Example 2; and

FIG. 1 7 is a graph showing the measurement results of photoelectric conversion efficiency, obtained by varying the distance between the oxide semiconductor layer and the catalyst layer, in the photoelectric conversion device of Example 2.

Aspects of the present invention will now be described below, based on Examples thereof and referring to the drawings, but the invention is not limited to the Examples, in which various numerical values and materials will be mentioned merely for exemplification. Incidentally, the description will be made in the following order.

1. General description of photoelectric conversion device pertaining to the present invention
2. Example 1 (Photoelectric conversion device pertaining to the invention)
3. Example 2 (Modification of Example 1), and others

[General description of photoelectric conversion device pertaining to the present invention]

In a photoelectric conversion device pertaining to (or, according to an embodiment of) the present invention, a form may be adopted in which an electrolyte layer is present between that part of a second base member over which a catalyst layer is not formed and the tip of a current collector. According to such a form, an oxide semiconductor layer and the catalyst layer can be disposed close to each other, so that the lowering in conversion efficiency arising from the resistance loss due to the electrolyte layer can be suppressed. Besides, in such a form, it is preferable to adopt a configuration which satisfies the relation $W_p < W_c$, where $W_p$ is the width of a tip portion of the current collector provided with a protective layer, and $W_c$ is the width of that part of the second base member over which the catalyst layer is not formed. Or, in some cases, $W_c$ is the width of the space between portions of the catalyst layer that are spaced apart from one another. According to such a configuration, breakage of the protective layer can be restrained from being generated due to contact between the protective layer and the catalyst layer. In addition, the current collector can be securely protected by the protective layer which surrounds the current collector, and the lowering of conversion efficiency can be suppressed.

Or, in the photoelectric conversion device pertaining to the present invention, a form may be adopted in which an electrolyte layer is present between a recess formed in the catalyst layer and the tip of the current collector. Besides, in such a form, it is preferable to adopt a configuration which satisfies the relation $W_p < W'_c$, where $W_p$ is the width of that tip portion of the current collector at which the protective layer is formed, and $W'_c$ is the width of the recess. With such a recess formed, the area of contact of the catalyst layer with the electrolyte layer is broadened, whereby a reduction reaction of oxidized-type redox ions is accelerated, and conversion efficiency can be enhanced. In addition, according to the configuration in which the relation $W_p < W'_c$ is satisfied, breakage of the protective layer can be restrained from being generated due to contact between the protective layer and the catalyst layer. In addition, the current collector can be assuredly protected by the protective layer, and the lowering of conversion efficiency can be suppressed.

In the photoelectric conversion device pertaining to the present invention inclusive of the above-described preferable form and configurations, it is desirable that the relations:

$$H > H_t + H_c, \text{ and}$$
$$H > H_p > H_t + g,$$

are satisfied, where

H is the distance between the transparent conductor layer and the second base member (in the case where the counter electrode is formed, the distance between the transparent conductor layer and the counter electrode),

$H_t$ is the thickness of the oxide semiconductor layer,

$H_c$ is the thickness of the catalyst layer,

$H_p$ is the distance from the transparent conductor layer to the protective layer covering the tip of the current collector, and $g$ is the distance between the oxide semiconductor layer and the catalyst layer. According to such a configuration, the oxide semiconductor layer and the catalyst layer can be disposed close to each other, and the lowering in conversion efficiency arising from the resistance loss due to the electrolyte layer can be suppressed. In addition, the lowering in conversion efficiency arising from the contact between the oxide semiconductor layer and the catalyst layer can be suppressed. In some embodiments, the semiconductor layer is discontinuous, having portions that are spaced apart from one another. As such, a portion of the current collector may be disposed between spaced apart portions of the semiconductor layer. Incidentally, the thickness $H_t$ of the oxide semiconductor layer is the average thickness of the oxide semiconductor layers, the thickness $H_c$ of the catalyst layer is the average thickness of the catalyst layer, and the distance $g$ between the oxide semiconductor layer and the catalyst layer is the average distance between the oxide semiconductor layers and the catalyst layer.

Further, in the photoelectric conversion device pertaining to the present invention inclusive of the preferred form and configurations as above-described, a configuration is preferably adopted in which the width of the oxide semiconductor layer is so determined that the value obtained by subtracting the power loss due to the resistance loss generated in the whole part of the oxide semiconductor layers from the electric power generated in the whole part of the oxide semiconductor layers is maximized or becomes not less than 90% of the maximum value. This ensures that the lowering of the conversion efficiency arising from the resistance loss due to the oxide semiconductor layers can be suppressed.

Furthermore, in the photoelectric conversion device pertaining to the present invention inclusive of the preferred form and configurations as above-described, it may be desirable that the distance $g$ between the oxide semiconductor layer and the catalyst layer is not less than 5 $\mu$m and not more than 40 $\mu$m, is not less than 5 $\mu$m and not more than 20 $\mu$m, or not less than 9 $\mu$m and not more than 16 $\mu$m.

Or, in other words, the photoelectric conversion device pertaining to the present invention includes:

(A) a transparent substrate and a counter substrate;

(B) a transparent conductor layer formed on the transparent substrate;

(C) porous oxide semiconductor layers formed in the shape of a plurality of lines on the transparent conductor layer;

(D) a current collection grid formed at those parts of the transparent conductor layer which are each located between the oxide semiconductor layer and the oxide semiconductor layer and which each have a surface covered with a protective layer;

(E) a catalyst layer formed in a continuous or discontinuous state on the counter substrate; and

(F) an electrolyte layer disposed between the oxide semiconductor layers and the catalyst layer;

wherein tip portions of the current collection grid are each interposed between portions of the catalyst layer. Specifically, in the case where the catalyst layer is formed in a discontinuous state, the tip portions of the current collection grid are each disposed opposite to the counter electrode between the adjacent catalyst layers. For example, the catalyst layer may have portions that are spaced and separate from one another. On the other hand, in the case where the catalyst layer is formed continuously, the tip portions of the current collection grid are each located in a recess formed in the catalyst layer. It should be noted that in either of the two cases, the tip portions of the current collection grid are not in contact with the counter substrate or the catalyst layer (in some cases, the counter electrode). Besides, since the tip portions of the current collection grid are each interposed between the catalyst layers (catalyst layer portions), the distance between the porous oxide semiconductor layers and the counter substrate can be shortened. Therefore, the resistance loss due to the electrolyte layer can be reduced, and, as a result, conversion efficiency can be enhanced. In addition, notwithstanding the simple structure, the height (thickness) of the current collection grid can be increased, whereby current collection efficiency can be enhanced. Moreover, in the case where the electrolyte layer is formed by use of an electrolyte solution, the electrolyte solution can be speedily poured (injected) into the gaps between the porous oxide semiconductor layers and the catalyst layers (or catalyst layer portions) along the tips of the current collection grid.

It suffices for the first base member (transparent substrate) to have a material which is transparent in visible light region. The first base member is desirably formed from a material which is excellent in barrier property (against moisture or gasses that might penetrate from the outside), solvent resistance, weatherability and the like. Specific examples of the material which can be used to constitute the first base member (transparent substrate) include transparent inorganic substrates such as glass substrate, ceramic substrate, quartz substrate, sapphire substrate, etc.; and substrates or films of transparent plastics such as polyester resins such as polyethylene terephthalate (PET), polyethylene naphthalate (PEN), etc.; polycarbonate (PC) resin; polyether sulfone (PES) resin; polystyrene; polyolefin resins such as polyethylene, polypropylene, etc. ; polyphenylene sulfide resin; polyvinylidene fluoride resin; tetraacetylcellulose resin; brominated phenoxy resin; aramide resin; polyimide resin; polystyrene resin; polyarylate resin; polysulfone resin; acrylic resin; epoxy resin; fluoro-resin; silicone resin; diacetate resin; triacetate resin; polyvinyl chloride resin; cyclic polyolefin resin, etc. Examples of the glass substrates include soda glass substrate, heat-resistant glass substrate, and quartz glass substrate. Examples of the ceramic substrates include alumina substrate. On that surface of the first base member (transparent substrate) which is on the light incidence side, an anti-reflection film may be formed, or a UV absorbing layer and/or anti-contamination layer may be formed.

The transparent conductor layer becomes more preferable as its sheet resistance (surface resistance) is lowered. Specifically, the sheet resistance (surface resistance) of the transparent conductor layer is preferably not more than 500 $\Omega/\square$, more preferably not more than 100 $\Omega/\square$. The transparent conductor layer can be formed by use of a known material. Specific examples of the material include indium-tin composite oxides (inclusive of ITO, or Indium Tin Oxide, Sn-doped $In_2O_3$, crystalline ITO and amorphous ITO), fluorine-doped $SnO_2$ (FTO), IFO (F-doped $In_2O_3$), antimony-doped $SnO_2$ (ATO), $SnO_2$, ZnO (inclusive of Al-doped ZnO, or AZO, and B-doped ZnO), indium-zinc composite oxide (IZO, or Indium Zinc Oxide), indium oxide, tin oxide, zinc oxide, antimony oxide, spinel-type oxides, and oxides having the $YbFe_2O_4$ structure. These materials are not limitative, and two or more of them may be used in combination. In the case of patterning the transparent conductor layer, the patterning can be carried out by various known etching methods, laser scribing, physical polishing or the like.

The current collectors (current collection grid, or current collection wiring layer) are formed by use of a material which is lower in electric resistance than the material of the transparent conductor layer. Examples of the material suitable for constituting the current collectors include gold (Au), silver (Ag), aluminum (Al), copper (Cu), platinum (Pt), titanium (Ti), nickel (Ni), iron (Fe), zinc (Zn), molybdenum (Mo), tungsten (W), chromium (Cr), compounds and alloys of these metals, and solders. Preferably, the current collectors are formed by applying a conductive paste containing at least one of these materials by screen printing or by use of a dispenser or the like. Optionally, the whole part or a part of the current collectors may be formed by use of a conductive adhesive, a conductive rubber, an anisotropic conductive adhesive or the like. Examples of the plan-view shape of the current collectors include grid-like shape, striped shape, and comb-like shape.

It suffices for the protective layer to be formed by use of a material which is resistant to corrosion by the electrolyte (e.g., iodine) constituting the electrolyte solution or the like. With the protective layer thus provided, the current collectors are prevented from making contact with the electrolyte layer, whereby a reverse electron transfer reaction and corrosion of the current collectors can be prevented from occurring. Examples of the material for forming the protective layer include metallic oxides, metallic nitrides such as TiN, WN, etc., glasses such as low-melting-point glass frit, etc., and various resins such as epoxy resin, silicone resin, polyimide resin, acrylic resin, polyisobutylene resin, ionomer resin, polyolefin resin, etc.

Examples of the material for forming the oxide semiconductor layers (porous oxide semiconductor layers) include those materials which are ordinarily used as photoelectric conversion material. In the case where the oxide semiconductor layers are formed by use of a dye-sensitized semiconductor, the oxide semiconductor layers typically have semiconductor particulates with a dye (photosensitizing dye) supported thereon. Examples of the material for forming the semiconductor particulates include not only elemental semiconductor materials represented by silicon (Si) but also various compound semiconductor materials, and compounds having the perovskite structure. These semiconductors are preferably n-type semiconductors in which conduction-band electrons become carriers under photoexcitation, to give an anode current. Specific examples of the semiconductors include semiconductor compounds such as titanium oxide ($TiO_2$), zinc oxide (ZnO), tungsten oxide ($WO_3$), niobium oxide ($Nb_2O_5$), strontium titanate ($SrTiO_3$), calcium titanate ($CITiO_3$), barium titanate ($BaTiO_3$), tin oxide ($SnO_2$), zirconium oxide ($ZrO_2$), indium oxide ($In_2O_3$), lanthanum oxide ($La_2O_3$), thallium oxide ($Ta_2O_5$), yttrium oxide ($Y_2O_3$), holmium oxide ($Ho_2O_3$), bismuth oxide ($Bi_2O_3$), cerium oxide ($CeO_2$), magnesium oxide (MgO), aluminum oxide ($Al_2O_3$), CdS, ZnS, PbS, and $Bi_2S_3$- Among these, particularly preferred is anatase-type $TiO_2$. It should be noted, however, that the semiconductor for use here is not limited to these semiconductors, and two or more of the semiconductors may be used in mixture. The semiconductor particulates may take any of various shapes or forms, as required, such as granular (particulate), needle-like, tubular, scaly (flaky), spherical, and rod-like shapes. The particle diameter of the semiconductor particulates is not particularly limited, and, in terms of average particle diameter of primary particles, it is preferably $1 \times 10^{-9}$ to $2 \times 10^{-7}$ m, more preferably $5 \times 10^{-9}$ to $1 \times 10^{-7}$ m. Besides, the semiconductor particulates having such an average particle diameter may be admixed with semiconductor particulates having a larger average particle diameter so that incident light is scattered by the semiconductor particulates having the larger average particle diameter, whereby quantum yield can be increased. In this case, the average particle diameter of the semiconductor particulates having a larger average particle diameter is preferably $2 \times 10^{-8}$ to $5 \times 10^{-7}$ m.

The method for forming the oxide semiconductor layer (dye-sensitized semiconductor layer) having the semiconductor particulates is not specifically restricted. Taking physical properties, convenience, production cost and the like into consideration, however, a wet-type film forming method is preferable. Specifically, a method is preferably used in which a powder or sol of the semiconductor particulates is uniformly dispersed in a solvent such as water, organic solvents, etc. to prepare a paste, and the paste is applied by coating. The coating method is not particularly restricted, and one of known methods can be used. Examples of the coating method include dipping method, spraying method, wire bar method, spin coating method, roller coating method, blade coating method, gravure coating method, and printing method. Specific examples of the printing method include relief printing method, offset printing method, gravure printing method, intaglio printing method, rubber plate printing method, and screen printing method.

In the case of using a commercially available powder, it is preferable to obviate agglomeration (secondary aggregation) of the particles; therefore, it is preferable to disperse the particles by use of a mortar, a ball mill, an ultrasonic dispersing device or the like in preparing the coating liquid. In this instance, acetylacetone, hydrochloric acid, sulfuric acid, a surfactant, a chelate agent or the like may be added to the pasty coating liquid, in order that the particles restrained from agglomeration will be prevented from being aggregated again. Besides, a polymer such as polyethylene oxide, polyvinyl alcohol, etc. or a thickener such as a cellulose-based thickener may be added to the paste, for the purpose of increasing the viscosity of the paste.

In the case where crystalline titanium oxide is used as the semiconductor particulates, the crystal type is preferably the anatase type, from the viewpoint of photocatalytic activity, as above-mentioned. The anatase-type titanium oxide is available in the commercialized powdery form, sol form or slurry form. Or, alternatively, anatase-type titanium oxide having a predetermined particle diameter can be obtained by a known method, such as hydrolysis of a titanium oxide alkoxide.

In the oxide semiconductor layer (dye-sensitized semiconductor layer) which has semiconductor particulates and has a dye-sensitized semiconductor, each of the semiconductor particulates preferably has a large surface area so that a large amount of the dye can be adsorbed thereon. Specifically, the surface area of the oxide semiconductor layer in the condition where the semiconductor particulates are formed on a support (e.g., transparent conductor layer) is preferably not less than $1 \times 10^1$ times, more preferably, not less than $1 \times 10^2$ times the projection area of the oxide semiconductor layer. There is no special upper limit for the surface area, a general value being about $1 \times 10^3$ times the projection area. In general, as the thickness of the oxide semiconductor layer having the semiconductor particulates increases, the amount of the dye supported per unit projection area is increased, and light capture ratio is raised. At the same time, however, diffusion distance for electrons is increased, so that loss due to recombination of electric charges is also increased. In view of these points, there is a preferable thickness for the oxide semiconductor layer. The thickness

is generally $1\times10^{-7}$ to $1\times10^{-4}$ m, preferably $1\times10^{-6}$ to $5\times10^{-5}$ m, more preferably $3\times10^{-6}$ to $3\times10^{-5}$ m. After application of the semiconductor particulates for forming the oxide semiconductor layers, the oxide semiconductor layers are preferably burned so as to ensure that the particulates are electronically connected to one another, that the film strength of the layers is enhanced, and that the adhesion of the layers to the support is enhanced. The range of the burning temperature is not particularly limited. If the burning temperature is too high, the electrical resistance of the support would be raised and, further, the support might be melted. Normally, therefore, the burning temperature is preferably in the range of 40 to 700°C, more preferably 40 to 650°C. Besides, while the burning time also is not specifically restricted, it is normally in the range from about 10 minutes to about 10 hours. After the burning, for example, a chemical plating treatment using an aqueous solution of titanium tetrachloride or a necking treatment using an aqueous solution of titanium trichloride or a dipping treatment in a sol of ultrafine semiconductor particulates of 10 nm or below in diameter may be carried out, for the purpose of increasing the surface area of the oxide semiconductor layers having the semiconductor particulates or enhancing the necking between the semiconductor particulates. In the case where a plastic substrate is used as the first base member (transparent substrate), a method may be adopted in which a paste containing a binder is applied to the first base member, and the oxide semiconductor layers are adhered under pressure to the first base member by use of a hot press.

Examples of the dye supported (adsorbed) on the oxide semiconductor layers and functioning as a photosensitizer include various known compounds which show absorption of light in the visible region and/or the infrared region. Specifically, organic dyes, metal complex dyes and the like can be used. Specific examples of the organic dyes include azo dyes, quinone dyes, quinoneimine dyes, quinacridone dyes, squarylium dyes, cyanine dyes (e.g., merocyanine, quinocyanine, cryptocyanine, etc.), merocyanine dyes, triphenylmethane dyes, xanthene dyes (e.g., Rhodamine B, Rose Bengale, erosine, erythrosine, etc.), porphyrin dyes, phthalocyanine dyes, cumarin compounds, perylene dyes, indigo dyes, naphthalocyanine dyes, acridine dyes, phenylxanthene dyes, antraguinone dyes, basic dyes (e.g., phenosafranine, Cabri blue, thiocine, Methylene Blue, etc.), and porphyrin compounds (e.g., chlorophyll, zinc porphyrin, magnesium porphyrin, etc.). Examples of metal complex dyes include ruthenium metal complex dyes such as ruthenium-bipyridine metal complex dyes, ruthenium-terpyridine dyes, and ruthenium-quaterpyridine metal complex dyes. Two or more of these dyes may be used in mixture. In order to achieve strong support (adsorption) of the dye(s) on the oxide semiconductor layers, use is preferably made of a dye(s) having an interlocking group such as carboxyl group, alkoxy group, hydroxyl group, hydroxyalkyl group, sulfonic acid group, ester group, mercapto group, phosphonyl group, etc. in the dye molecule. Among such dyes, particularly preferred are those having the carboxyl group (COOH group). In general, an interlocking group has a function by which a dye is adsorbed on and fixed to the surface of the material constituting the oxide semiconductor layers, and the interlocking group offers electrical coupling for facilitating the electron transfer between the dye in the excited state and the conduction band in the oxide semiconductor layers.

The method for supporting (adsorbing) the dye on the oxide semiconductor layers (dye-sensitized semiconductor layers) is not particularly restricted. Examples of the method include a method in which the dye is dissolved in a solvent such as alcohols, nitriles, nitromethane, halogenated hydrocarbons, ethers, dimethyl sulfoxide, amides, N-methylpyrrolidone, 1,3-dimethylimidazolidinone, 3-methyloxazolidinone, esters, carbonate esters, ketones, hydrocarbons, water, etc. and the oxide semiconductor layers are immersed in the resulting solution, and a method in which a solution containing the dye is applied to the oxide semiconductor layers. Besides, in the case where a highly acidic dye is used, a deoxycholic acid may be added to the solution, for the purpose of suppressing association among the dye molecules. After the dye is supported on the oxide semiconductor layers, the dye-supporting surfaces may be treated with an amine, for the purpose of promoting removal of an excess portion of the dye supported. Examples of the amine include pyridine, 4-tert-butylpyridine, and polyvinyl pyridine, which may, when liquid, be used as it is, or may be used in the state of its solution in an organic solvent.

Examples of the second base member (counter substrate) include glass substrates or resin sheets or films which are provided thereon with a transparent conductor film (inorganic conductive oxide film) such as ITO, FTO, etc., and glass substrate, ceramic substrate, quartz substrate, plastic sheets or films which are provided thereon with an opaque metal film. Specific examples include the various materials described above concerning the first base member. Incidentally, the transparent conductor film or the metal film serves as the counter electrode. Gas barrier films having an oxygen permeability of not more than 100 cc/m$^2$/day/atm and a water vapor permeability of not more than 100 g/m$^2$/day may also be used. Specifically, gas barrier films obtained by laminating one or more gas barrier materials selected from the group consisting of aluminum, silica and alumina may also be used. In the case where a substrate or foil having a metal or alloy (e.g., stainless steel) containing at least one element selected from the group consisting of Ni, Cr, Fe, Nb, Ta, W, Co and Zr is used as the second base member, the counter electrode may not necessarily be provided.

The material constituting the counter electrode may be an arbitrary material insofar as it is electrically conductive. In addition, an insulating material may also be used for constructing the counter electrode if the insulating material is provided thereon with a conductive catalyst layer on the side facing the oxide semiconductor layer. The material of the counter electrode is preferably an electrochemically stable material. Specific examples of the material to be desirably used include platinum (Pt), gold (Au), silver (Ag), palladium (Pd), ruthenium (Ru), iridium (In), copper (Cu), aluminum (Al), carbon (C) such as carbon black, etc., and conductive polymers. Besides, in the case of configuring the photoelectric conversion device from dye-sensitized solar cells, the counter electrode may be made to have a fine structure on the side of the oxide semiconductor layer so as to have an increased surface area on that side, for the purpose of enhancing a catalytic effect on oxidation and reduction. For example, where the counter electrode is formed by use of platinum, its surface is preferably formed in the state of platinum black. Where the counter electrode is formed by use of carbon, its surface is preferably formed in a porous state. The platinum black state can be attained by anodization of platinum, a reducing treatment of a platinum compound, or the like. On the other hand, carbon in a porous state can be obtained by sintering of carbon particulates, burning of an organic polymer, or the like.

The catalyst layer may be any one that has a catalytic activity by which a reduction reaction of oxidation-type redox ions such as $I_3^-$ in the electrolyte layer is accelerated and made to proceed at a sufficient rate. Examples of the catalyst layer include layers which have platinum (Pt), carbon (C), rhodium (Rh), ruthenium (Ru), iridium (Ir) or the like. Examples of the method for forming the catalyst layer include wet-type methods in which a solution containing the catalyst or a precursor of the catalyst is applied, and dry-type methods including physical vapor deposition methods (PVD methods) such as sputtering, vacuum evaporation, etc. and various chemical vapor deposition methods (CVD methods).

The electrolyte layer is formed by use of an electrolyte composition. For instance, where the electrolyte composition is formed by use of an electrolyte solution, examples of the electrolyte solution include various electrolyte solutions containing a cation, such as lithium ion, and an anion, such as iodine ion. Preferably, an oxidation-reduction couple capable of reversibly taking an oxidation-type structure and a reduction-type structure is made to present in the electrolyte composition. Examples of such an oxidation-reduction couple include: iodine-iodide; bromine-bromide; quinone-hydroquinone; metal complexes such as ferrocyanate-ferricyanate, ferrocene-ferricinium ion, etc.; sulfur compounds such as sodium polysulfide, alkyl thiol-alkyl disulfide, etc.; and viologen dyes. Or, alternatively, the electrolyte composition may be formed by use of any of the following: combinations of iodine ($I_2$) with a metal iodide or an organic iodide; combinations of bromine ($Br_2$) with a metal bromide or an organic bromide; metal complexes such as ferrocyanate/ferricyanate, ferrocene/ferricinium ion, etc.; sulfur compounds such as sodium polysulfide, alkyl thiol/alkyl disulfide, etc.; viologen dyes; hydroquinone/quinone, etc. Preferred examples of the cations constituting the above-mentioned metallic compounds include Li, Na, K, Mg, Ca, Cs, etc., while preferred examples of the cations constituting the above-mentioned organic compounds include quaternary ammonium compounds such as tetraalkylammoniums, pyridiniums, imidazoliums, etc. Naturally, these preferred examples are non-limitative examples, and two or more of them may be used in mixture. Among these, particularly preferred are those electrolyte compositions obtained by combining of $I_2$ with LiI, NaI, or a quaternary ammonium compound such as imidazolium iodide. The concentration of the electrolyte salt based on the amount of solvent is preferably 0.05 to 10 M, more preferably 0.2 to 3 M. The concentration of $I_2$ or $Br_2$ is preferably 0.0005 to 1 M, more preferably 0.001 to 0.3 M. Besides, for the purpose of enhancing open circuit voltage $V_{oc}$, an additive having an amine compound represented by 4-tert-butylpyridine may be added to the electrolyte composition. Incidentally, other than the electrolyte solution, a gel electrolyte or a solid electrolyte or a molten salt gel electrolyte can also be used to form the electrolyte layer or the electrolyte composition.

Examples of the solvent used for preparing the electrolyte composition include water, alcohols, ethers, esters, carbonic acid triesters, lactones, carboxylic acid esters, phosphoric acid esters, heterocyclic compounds, nitriles, ketones, amides, nitromethane, halogenated hydrocarbons, dimethyl sulfoxide, sulfolane, N-methylpyrrolidone, 1,3-dimethylimidazolidinone, 3-methyloxazolidinone, and hydrocarbons. These are non-limitative examples, and two or more of them may be used in mixture. Further, those liquids which contain ions of a quaternary ammonium compound such as tetraalkyl compounds, pyridinium compounds, imidazoliums, etc. can also be used as the solvent.

Gelled electrolyte compositions prepared by dissolving a gelling agent, polymer, cross-linking monomer or the like in an electrolyte composition or dispersing inorganic ceramic particles in an electrolyte composition can also be used, for the purpose of suppressing liquid leakage and/or volatilization (evaporation) of the electrolyte composition. As for the ratio between the amount of the gel matrix and the amount of the electrolyte composition, the following should be considered. If the amount of the electrolyte composition is too large, mechanical strength will be lowered although ionic conductivity will be high. On the contrary, if the amount of the electrolyte composition is too small, ionic conductivity will be lowered although mechanical strength will be high. Therefore, the amount of the electrolyte composition is preferably 50 to 90 wt%, more preferably 80 to 97 wt%, based on the amount of the gelled electrolyte composition. Furthermore, a totally solid type photoelectric conversion device can be realized by a method in which the electrolyte composition and a plasticizer are dissolved in a polymer and then the plasticizer is evaporated off.

A sealing layer for joining the first base member (transparent substrate) and the second base member (counter substrate) to each other prevents the electrolyte composition from leakage or volatilization (evaporation), and prevents impurities from externally penetrating into the inside of the photoelectric conversion device. To form the sealing layer, a resin is preferably used which is durable to the electrolyte composition constituting the electrolyte layer. Examples of such a resin include heat-weldable film, thermoplastic resin, and UV-curing resin. More specific examples of the resin for forming the sealing layer include epoxy resin, UV-curing resin, acrylic adhesive, EVA (ethylene-vinyl acetate copolymer), ionomer resin, ceramic, and various heat-weldable films.

In the case where the electrolyte composition is formed by use of an electrolyte solution, the electrolyte solution is poured (or injected) into the gaps between the oxide semiconductor layers and the catalyst layer(s) along the tips of the current collectors. The method for pouring the electrolyte solution is not particularly restricted. Preferably, a method is used in which the electrolyte solution is poured, under a reduced pressure, into the inside of the photoelectric conversion device which is provided with a pouring port and outer edge portions (outer peripheral portions) of which have preliminarily been sealed off. In this case, a method in which several drops of the electrolyte solution are dropped on the pouring port and the solution is poured into the inside of the photoelectric conversion device by capillarity is simple and easy to carry out. If necessary, pressure reduction and/or heating may be conducted in carrying out the solution pouring operation. After the electrolyte solution is poured in completely, the solution remaining on the pouring port is removed, and the pouring port is sealed off. The sealing method in this case, also, is not particularly restricted. If necessary, the sealing may be conducted by adhering a glass substrate or plastic substrate with a sealing agent. Another sealing method may be adopted in which, like in the liquid crystal dropping pouring (ODF: One Drop Filling) step in the manufacture of a liquid crystal panel, the electrolyte solution is dropped onto a substrate, then the substrates are adhered to each other under a reduced pressure. Incidentally, in the cases of the gelled electrolyte composition or the totally solid type electrolyte composition in which a polymer is used, a film of a polymer solution containing the electrolyte composition and the plasticizer is formed on the oxide semiconductor layers by the casting method, and the plasticizer is evaporated off. After the plasticizer is completely removed, sealing is conducted in the same manner as in the above-mentioned method. The sealing is preferably carried out in an inert gas atmosphere or under a reduced pressure, while using a vacuum sealer or the like. After the sealing is over, heating and/or pressurization may be carried out, as required, for securing sufficient impregnation of the oxide semiconductor layers with the electrolyte solution. Or, for example, a method in which a dispenser is used or a printing method inclusive of ink jet printing may be adopted for forming the electrolyte composition by use of an electrolyte solution.

In the case of configuring the photoelectric conversion device from dye-sensitized solar cells, the method for manufacturing the photoelectric conversion device is not particularly limited. Taking the thicknesses of layers, productivity, accuracy of patterns, etc. into consideration, however, other layers than the counter electrode are preferably formed by a coating method such as a screen printing method, a spray coating method, etc., particularly the screen printing method. The oxide semiconductor layers are preferably formed by applying a paste which contains the particles for constituting the layers, followed by burning.

The photoelectric conversion devices may be fabricated based on various shapes, structures and configurations according to the intended uses thereof, which are not especially limited. Most typically, the photoelectric conversion device is used as a solar cell; other than the solar cell use, the photoelectric conversion device is also applicable to a photosensor and the like. An electronic apparatus into which the photoelectric conversion device is incorporated may basically be any of electronic apparatuses inclusive of portable-type ones and stationary-type ones. Specific examples of the electronic apparatus include cell phones, mobile apparatuses, robots, personal computers, on-vehicle apparatuses, and a variety of household electrical appliances. In this case, the photoelectric conversion device is used, for example, as a power source in these electronic apparatuses.

[Example 1]

Example 1 relates to the photoelectric conversion device according to an embodiment of the present invention, particularly to a dye-sensitized solar cell.

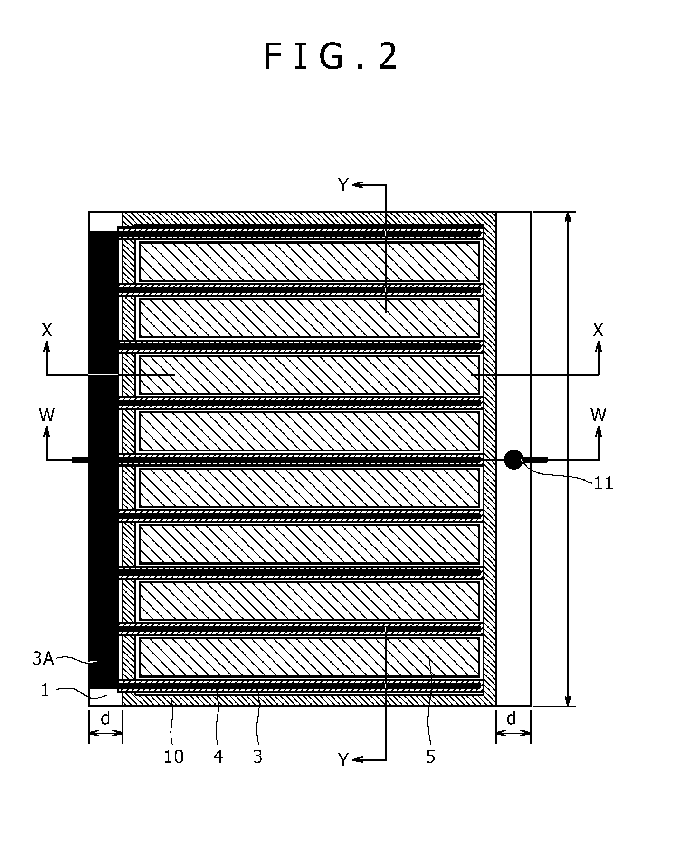

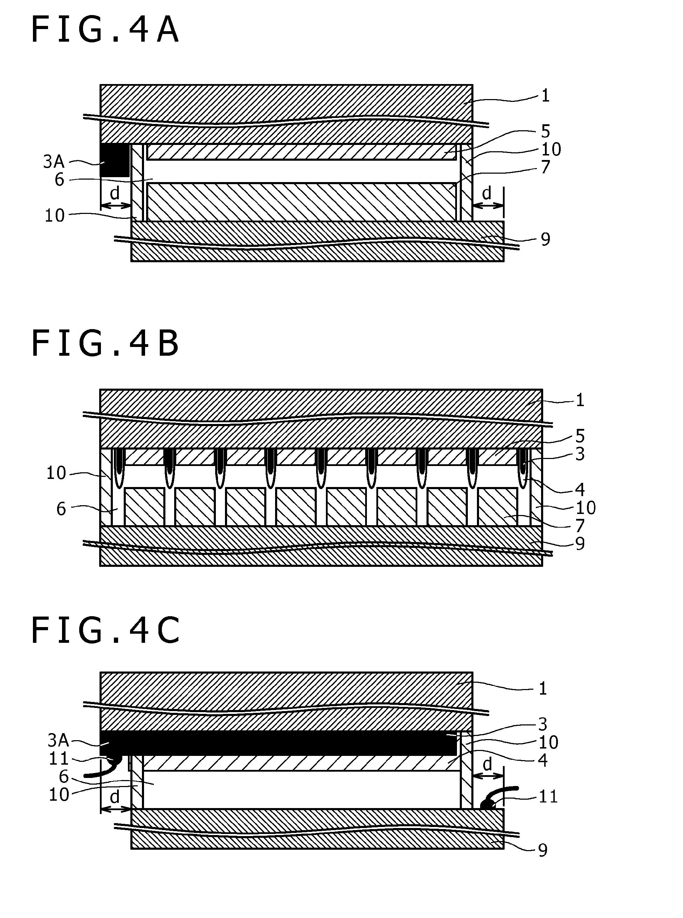

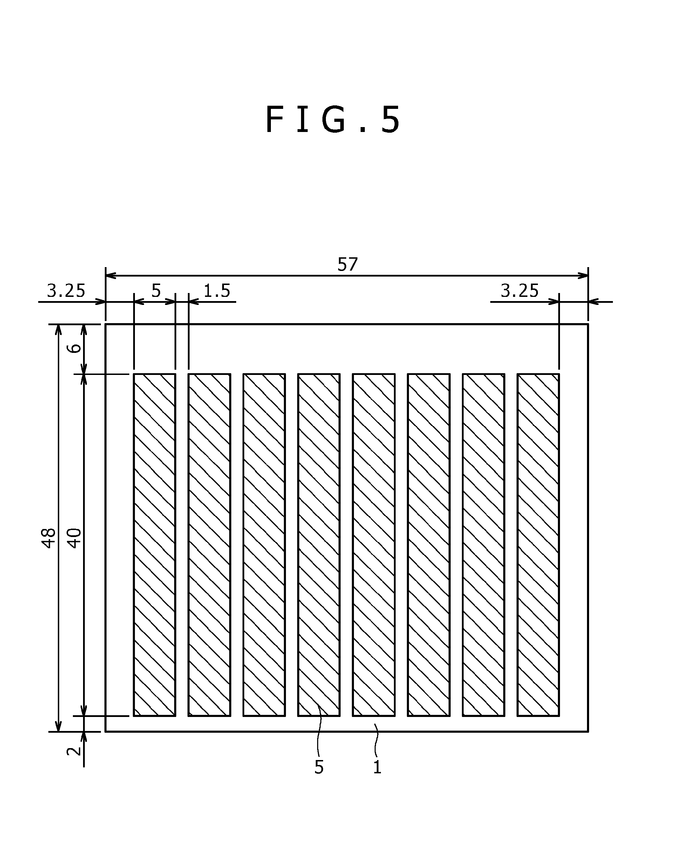

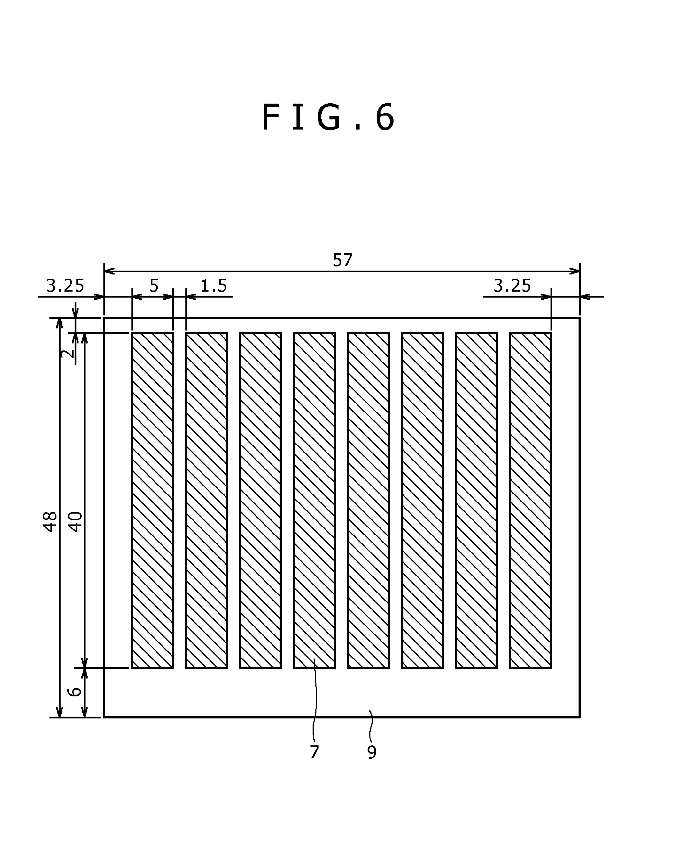

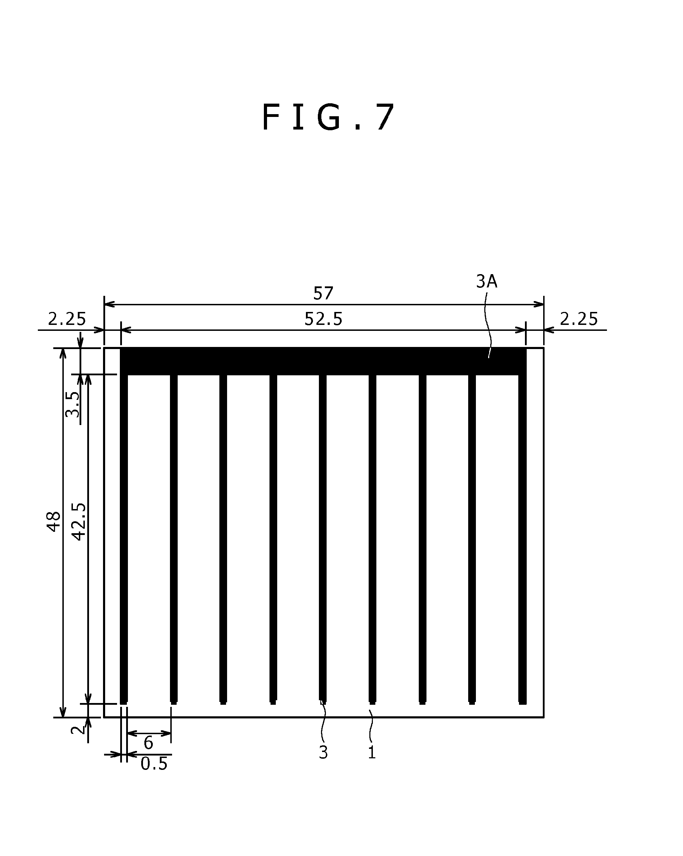

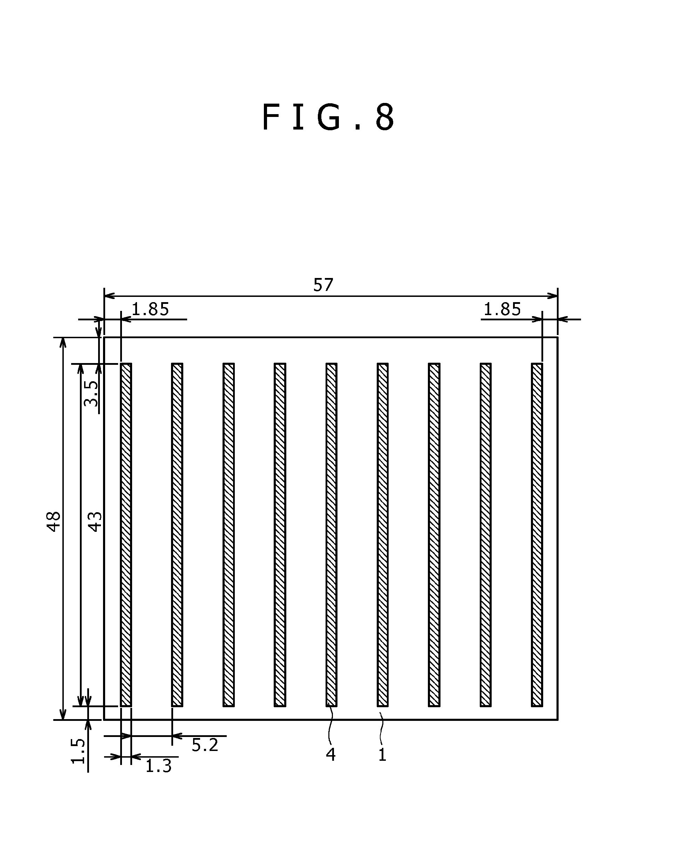

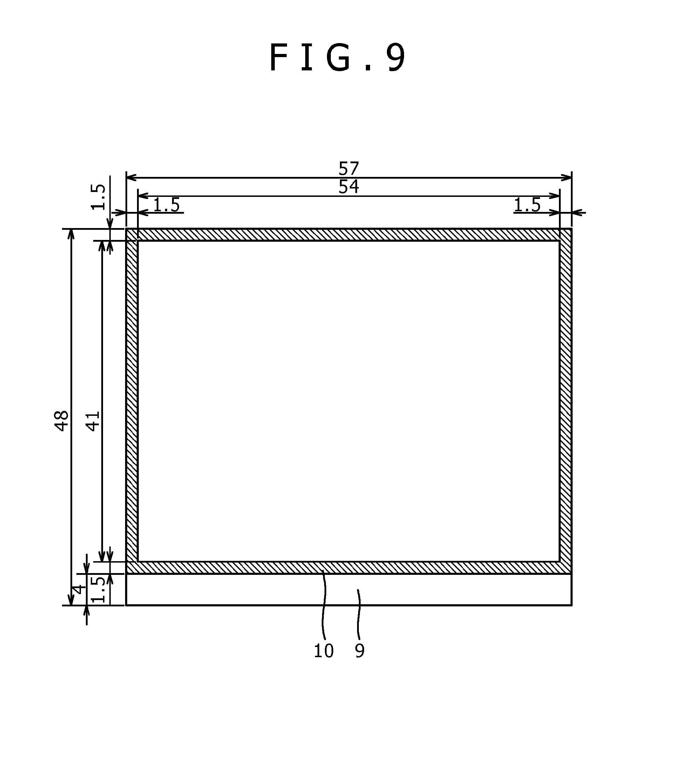

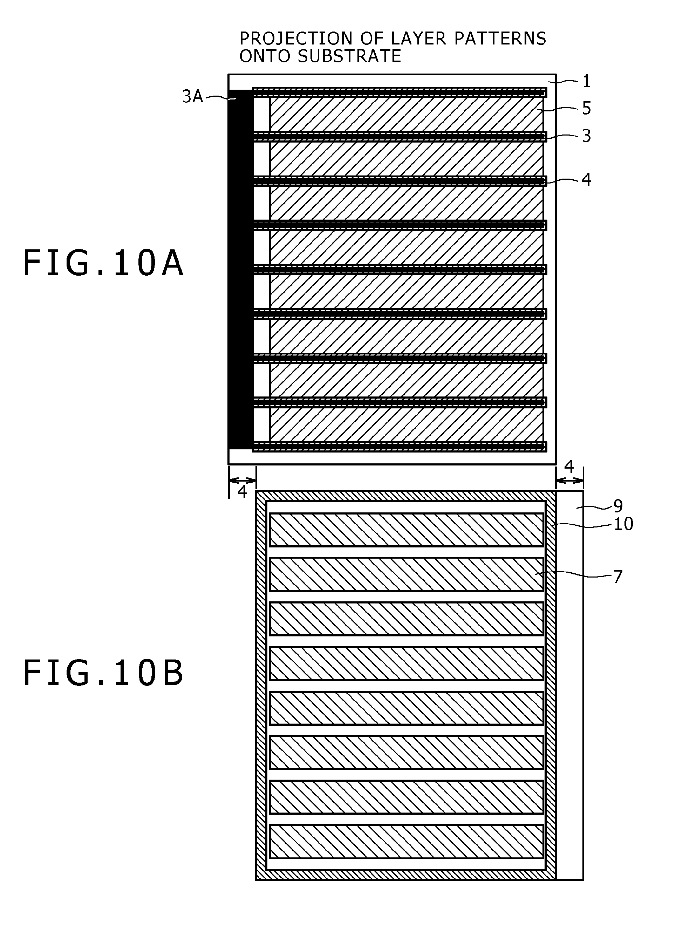

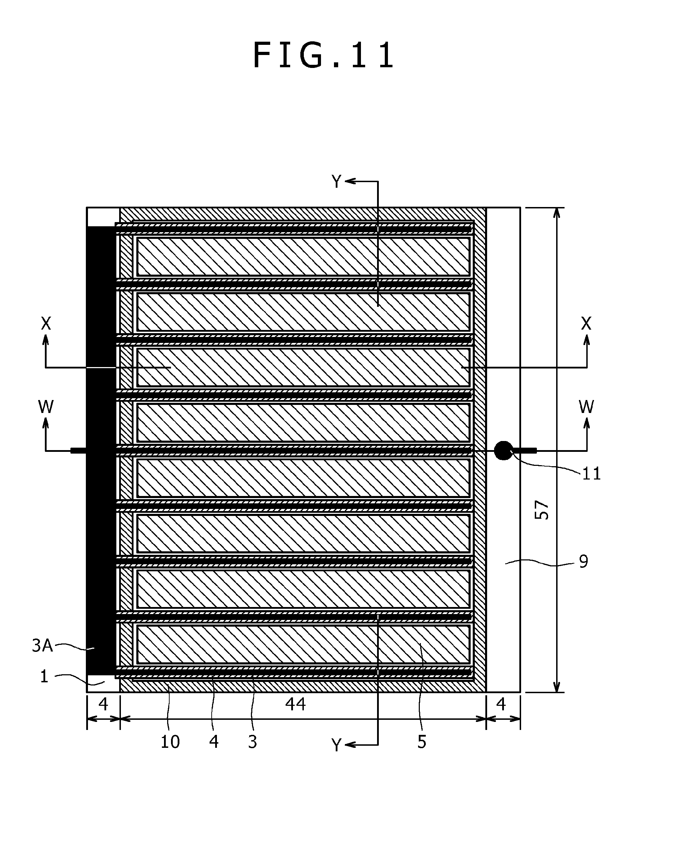

A schematic partial sectional view of a photoelectric conversion device according to Example 1 of the present invention is shown in FIGS. 1A to 1C, and an enlarged schematic partial sectional view of a part of the photoelectric conversion device of Example 1 is shown in FIG. 1B. Also, a schematic partial sectional view of a photoelectric conversion device according to Comparative Example 1A is shown in FIG. 1C. In addition, a schematic plan view of the photoelectric conversion device of Example 1 is shown in FIG. 2, and projection views obtained by projection of formation patterns of layers constituting the photoelectric conversion device of Example 1 are shown in FIGS. 3A and 3B, wherein FIG. 3A is a view obtained by projecting the formation patterns of oxide semiconductor layers, current collectors and a sealing layer onto a first base member, whereas FIG. 3B is a view obtained by projecting the formation patterns of the catalyst layers and the sealing layer onto a second base member. Further, schematic sectional views of the photoelectric conversion device of Example 1 are shown in FIGS. 4A, 4B and 4C, wherein FIG. 4A is a sectional view taken along line X-X of FIG. 2 (X-X sectional view), FIG. 4B is a sectional view taken along line Y-Y of FIG. 2 (Y-Y sectional view), and FIG. 4C is a sectional view taken along line W-W (W-W sectional view). Besides, the formation pattern of oxide semiconductor layers in the photoelectric conversion device of Example 1 is shown in FIG. 5, the formation pattern of catalyst layers in the photoelectric conversion device of Example 1 is shown in FIG. 6, the formation pattern of the current collectors in the photoelectric conversion device of Example 1 is shown in FIG. 7, the formation pattern of protective layers in the photoelectric conversion device of Example 1 is shown in FIG. 8, and the formation pattern of the sealing layer in the photoelectric conversion device of Example 1 is shown in FIG. 9. Furthermore, schematic plan views of components at a part of the photoelectric conversion device of Example 1 are shown in FIGS. 10A and 10B, and a schematic plan view of the photoelectric conversion device of Example 1 is shown in FIG. 11.

The photoelectric conversion device (dye-sensitized solar cell) according to Example 1 includes:

(A) a first base member (transparent substrate) 1 and a second base member (counter substrate) 9;
(B) a transparent conductor layer 2 formed on the first base member 1;
(C) a plurality of oxide semiconductor layers 5 juxtaposed to each other on the transparent conductor layer 2;
(D) catalyst layers 7 provided on the second base member 9; and
(E) an electrolyte layer 6 disposed between the oxide semiconductor layers 5 and the catalyst layers 7. At that part of the transparent conductor layer 2 which is located in each region between the oxide semiconductor layer 5 and the oxide semiconductor layer 5 (for convenience, this region will be referred to as "oxide semiconductor layer non-forming region"), a current collector 3 having a surface covered with a protective layer 4 is provided along the oxide semiconductor layers 5. Incidentally, light is incident on the oxide semiconductor layers 5 through the first base member 1 and the transparent conductor layer 2.

As shown in FIG. 2 and 3A, the oxide semiconductor layers 5 are patterned in a strip shape (rectangular shape), and, in the example shown in FIGS. 2 and 3A, they are formed in eight strips disposed in parallel. In addition, the current collectors 3 and the protective layer 4 have respective small widths, and are formed linearly along a plurality of lines (in the example shown in FIGS. 2 and 3A, along nine lines), with one-side ends of the current collectors 3 being connected to a current collector terminal 3A formed in a strip shape (rectangular shape) disposed in parallel. The current collectors (current collector grid) 3, formed of silver (Ag), each function as a current collection wiring layer. The catalyst layers 7 are also patterned in a strip shape (rectangular shape), and are formed in a plurality of strips (in the example shown in FIG. 3B, in eight strips) disposed in parallel. The oxide semiconductor layer 5, with a dye supported thereon, the electrolyte layer 6 and the catalyst layer 7 constitute one photoelectric conversion element, and a plurality of such photoelectric conversion elements constitute the photoelectric conversion device (dye-sensitized solar cell). One photoelectric conversion element and the adjacent photoelectric conversion element are separated by the current collector 3, and each photoelectric conversion element is connected to two adjacent current collectors 3. The second base member (counter substrate) 9 is provided thereon with a counter electrode 8. It is to be noted here, however, that in the case where the second base member 9 is formed of a metal (e.g., titanium), the second base member 9 may not necessarily be provided with the counter electrode 8 because the second base member 9 also functions as the counter electrode 8. The first base member 1 and the second base member 9 are sealed with a sealing layer 10.

As shown in FIGS. 1A and 1B, the catalyst layer 7 is not formed on those parts of the second base member 9 which face the oxide semiconductor layer non-forming regions, and tip portions 3a of the current collectors 3 extend toward those parts of the second base member 9 on which the catalyst layer 7 is not formed. In other words, the tip portion 3a of each current collector 3 is opposed to the second base member 9, between the adjacent catalyst layers 7, and is interposed between the catalyst layers 7. Besides, the electrolyte layer 6 is present between each of those parts of the second base member 9 on which the catalyst layer 7 is not formed and the tip 3b of each current collector 3. In such a way, the catalyst layers 7 are formed in a discontinuous state, and, at the discontinuous part between the adjacent strip-shaped catalyst layers 7, the counter electrode 8 is in contact with the electrolyte layer 6. Or, in other words, a space between portions of a discontinuous catalyst layer is free of the catalyst layer material. The tip 3b of each current collector 3 is opposed to the counter electrode 8, the tip 3b of the current collector 3 is not in contact with the counter electrode 8, and the electrolyte layer 6 is present between the tip 3b of the current collector 3 and the counter electrode 8. This configuration ensures that the height (thickness) of the current collectors 3 can be enlarged, and current collection efficiency can be thereby enhanced. Explained another way, the catalyst layer 7 has a first portion and a second portion where the first portion is spaced from the second portion. The first portion and the second portion of the catalyst layer are also separate from one another, yielding a discontinuous layer. The end of the tip 3b of the current collector 3 extends within the space between the first and second portions of the catalyst layer. In some embodiments, the end of the tip 3b of the current collector 3 extends toward the space between the first and second portions of the catalyst layer.

Incidentally, in FIGS. 4B, 12A, 13A and 13C, the tip portion 3a of each current collector 3 appears not to be interposed between the catalyst layers 7. Hence, the end of the tip 3b of the current collector 3 may extend toward the space between the first and second portions of the catalyst layer without entering within this space. Oftentimes in practice, however, as shown in FIG. 1A, the tip portion 3a of each current collector 3 is extended, more than shown in these figures, toward that part of the second base member 9 on which the catalyst layer 7 is not formed, and the tip portion 3a is interposed between the catalyst layers 7.

Incidentally, a configuration may be adopted in which the catalyst layer 7 is provided with recesses at those parts which face the oxide semiconductor layer non-forming regions and in which the tip portions 3a of the current collectors 3 extend into the recesses, respectively. In this configuration, the catalyst layer 7 is formed in a continuous form, and the electrolyte layer 6 and the catalyst layer 7 are present between the second base member 9 and the tip 3b of each current collector 3 opposed to the second base member 9. In other words, the catalyst layer 7 is formed with recesses (grooves) in correspondence with the positions at which the tips 3b of the current collectors 3 are opposed to the counter electrode 8, and the tip portions 3a of the current collectors 3 are located in the recesses, respectively. Specifically, the tip portions 3a of the current collectors 3 are contained within the recesses (grooves), respectively. In addition, the electrolyte layer 6 is present between each recess formed in the catalyst layer 7 and the tip 3b of each current collector 3. This structure provides the area of contact of the catalyst layer 7 (which is formed in a continuous form) with the electrolyte layer 6 to be broadened, a reduction reaction of oxidation-type redox ions is accelerated, and conversion efficiency is thereby enhanced. In addition, the height (thickness) of the current collectors 3 can be enlarged, and current collection efficiency can be thereby enhanced. Incidentally, the relation $W_p < W'_c$ is satisfied, where $W_p$ is the width of the tip portion 3a of the current collector 3 provided with the protective layer 4, and $W'_c$ is the width of the recess.

Here, in the case where an electrolyte solution is used to form the electrolyte layer 6, when the electrolyte solution is poured from a pouring port (not shown), the electrolyte solution speedily spreads in the discontinuous parts or the recesses (grooves) of the catalyst layer(s) 7. Consequently, the electrolyte solution can be efficiently poured (injected) into the narrow gaps between the oxide semiconductor layers 5 and the catalyst layer(s) 7.

The tip portions 3a of the current collectors 3 have narrow widths, and are formed linearly in a plurality of lines. In a photoelectric conversion device enlarged in a light receiving surface area, current collection wiring layers such as the current collectors 3 are required. When the distance between the transparent conductor layer 2 and the counter electrode 8 is enlarged due to the formation of the current collectors 3, conversion efficiency is lowered. Therefore, it is desirable to shorten this distance as much as possible.

Of the first base member 1 and the second base member 9, the regions of one-side end part having a width d are exposed to the exterior, as the current collector terminal 3A in connection with the current collectors 3 and as a connection terminal 11 for the second base member 9, respectively. Wirings are connected to the current collector terminal 3A and the connection terminal 11, and are connected to an external load.

FIG. 5 shows the formation pattern of the oxide semiconductor layers ($TiO_2$ layers) 5 in the photoelectric conversion device of Example 1. The oxide semiconductor layers 5 are formed on the first base member (transparent substrate) 1, and are in the shape of strips (rectangles) measuring 40 mm x 5 mm and 20 $\mu$m in thickness and disposed in parallel. FIG. 6 shows the formation pattern of the catalyst layers 7. The catalyst layers 7 are formed on the second base member (counter substrate) 9 in a pattern of the same shape as the oxide semiconductor layers 5 and in a thickness of 50 $\mu$m. FIG. 7 shows the formation pattern of the current collectors (current collection grid) 3. The current collectors 3 are linearly formed in nine lines, each of which is 0.5 mm in width, 42.5 mm in length, and 30 $\mu$m in height (thickness). Besides, the current collectors 3 are connected to the current collector terminal 3A which is formed in a strip pattern measuring 3.5 mm $\times$ 52.5 mm and 30 $\mu$m in thickness and disposed in parallel. FIG. 8 shows the formation pattern of the protective layers 4. The protective layers 4 are each formed in a linear shape which is 1.3 mm in width, 43 mm in length, and 20 $\mu$m in thickness, and are covering the current collectors 3, respectively. FIG. 9 shows the formation pattern of the sealing layer 10. The sealing layer 10 is patterned to have a width of 1.5 mm, and is formed along the four outer edges of the second base member 9.

Schematic plan views of components of a part of the photoelectric conversion device of Example 1 are shown in FIGS. 10A and 10B, and a plan view of the photoelectric conversion device of Example 1 is shown in FIG. 11. In FIG. 11, the first base member 1 and the second base member 9 are both shown, in the manner of seeing through the oxide semiconductor layers 5, the catalyst layers 7, the current collectors 3, the protective layers 4, and the sealing layer 10. As shown in FIG. 11, a region of 4 mm in width and 57 mm in length, including the part of the current collector terminal 3A, is exposed to the exterior on one side (the left side in FIG. 11). Besides, a region of 4 mm in width and 57 mm in length, for providing the connection terminal 11, is exposed to the exterior on the other side (the right side in FIG. 11).

Here, more specifically, in the photoelectric conversion device of Example 1, the transparent conductor layer 2 is formed of FTO, and the oxide semiconductor layers 5 with Z907 as the dye supported thereon are formed from $TiO_2$. The current collectors (current collection grid) 3 and the current collector terminal 3A are formed of silver (Ag), the protective layers 4 are formed from an epoxy resin, and the catalyst layers 7 are formed of carbon (C). Unlike in the example shown in FIGS. 1A to 1C, the second base member 9 serves also as the counter electrode 8, and is formed of titanium (Ti). The sealing layer 10 is formed from a UV-curing resin.

As shown in FIG. 1B, the definitions of the parameters H, $H_t$, $H_c$, $H_p$, $H_a$, g, $W_c$, $W_p$, and $W_a$ are given in Table 1 below. Besides, the values of these parameters in Example 1 are also given in Table 1.

[Table 1]

| H | Distance between transparent electrode layer 2 and counter electrode 8 | 100 $\mu$m |
|---|---|---|
| $H_t$ | Thickness of oxide semiconductor layer 5 | 20 $\mu$m |

(continued)

| | | | |
|---|---|---|---|
| $H_c$ | Thickness of catalyst layer 7 | | 50 $\mu$m |
| $H_p$ | Distance from transparent electrode layer 2 to protective layer 4 covering tip portion 3b of current collector 3 | | 50 $\mu$m |
| $H_a$ | Distance from transparent electrode layer 2 to tip portion 3b of current collector 3 | | 30 $\mu$m |
| $g$ | Distance (gap) between oxide semiconductor layer 5 and catalyst layer 7 | | 30 $\mu$m |
| $W_c$ | Distance between catalyst layer 7 and catalyst layer 7 formed in strip shapes | | 1.5 mm |
| | Thickness of protective layer 4 covering tip portion 3a of current collector 3 | | 0.4 mm |
| $W_a$ | Width of tip portion 3a of current collector 3 | | 0.5 mm |
| $W_p$ | Width of tip portion 3a provided thereon with protective layer 4 | | 1.3 mm |
| $H_p$ - $H_a$ | Thickness of protective layer 4 covering tip portion 3b of current collector 3 opposed to second base member | | 20 $\mu$m |

Here, the thickness $H_t$ of the oxide semiconductor layers 5 on which to support the dye is the average distance between that surface of the oxide semiconductor layer 5 which faces the transparent conductor layer 2 and that surface of the oxide semiconductor layer 5 which faces the catalyst layer 7. In addition, the thickness $H_c$ of the catalyst layers 7 is the average distance between that surface of the catalyst layer 7 which faces the counter electrode 8 and that surface of the catalyst layer 7 which faces the oxide semiconductor layer 5. Further, the distance (gap) $g$ between the oxide semiconductor layer 5 and the catalyst layer 7 is the average distance between the oxide semiconductor layer 5 and the catalyst layer 7. In various embodiments, the distance g may range between about 5 $\mu$m and about 40 $\mu$m, between about 5 $\mu$m and about 20 $\mu$m, or between about 9 $\mu$m and about 16 $\mu$m. Besides, the sum of the height (thickness) $H_a$ of the current collectors 3 and the thickness of that part of the protective layer 4 which covers the tip 3b of the current collector 3 is $H_p$.
As shown in FIG. 1B, the relation
$H > H_t + H_c$ is satisfied. In other words, $g > 0$, which means that the oxide semiconductor layer 5 and the catalyst layer 7 are separately disposed so that they do not make contact with each other. Besides, the relation
$H > H_p > H_t + g$
is satisfied. Those parts of the protective layers 4 which cover the tips 3b of the current collectors 3 are so disposed as not to make contact with the counter electrode 8 opposed thereto, between the adjacent strip-shaped catalyst layers 7 formed discontinuously in a plurality of parallel lines. In addition, the catalyst layers 7 are also formed in a discontinuous state. Besides, $W_p < W_c$, specifically, $W_a < W_p < W_c$. This means that a configuration is adopted in which the protective layer 4 and the catalyst layer 7 do not make contact with each other, and in which the electrolyte layer 6 is present between the second base member 9 (specifically, the counter electrode 8) and the tip 3b of the current collector 3 opposed to the second base member 9.

This configuration ensures that the height (thickness) of the current collectors 3 can be enlarged, thereby enhancing current collection efficiency, and the current collectors 3 can be securely protected by the protective layers 4. In addition, the oxide semiconductor layer 5 and the catalyst layer 7 can be disposed close to each other, so that the lowering of conversion efficiency arising from the resistance loss due to the electrolyte layer can be suppressed. Furthermore, the lowering of conversion efficiency due to the contact of the oxide semiconductor layer 5 with the catalyst layer 7 or the counter electrode 8 can be restrained.

Comparative Example 1A is shown in FIG. 1C. In Comparative Example 1, the catalyst layer 17 is formed continuously in a constant thickness. In Comparative Example 1A, the distance between the oxide semiconductor layer 5 and the catalyst layer 17 is $H_p$-$H_c$, which obviously is greater than g. Consequently, the lowering of conversion efficiency arising from the resistance loss due to the electrolyte layer 6 would be enlarged. In addition, since $H_r > H$, the thickness of the structure shown in Comparative Example 1A is greater than the thickness of the structure shown in Example 1.

Here, the thicknesses (heights) of the layers constituting the photoelectric conversion device are as follows.

The thickness of the first base member (transparent substrate) is not particularly limited, and can be freely selected according to the configuration of the photoelectric conversion device. Taking mechanical strength and weight into consideration, the thickness is normally 0.5 to 10 mm, preferably 1 to 5 mm.

The thickness of the transparent conductive layer 2 also is not specially restricted, and can be freely selected according to the configuration of the photoelectric conversion device. Taking into account the balance between light transmittance and sheet resistance, the thickness is $5 \times 10^{-8}$ to $2 \times 10^{-6}$ m, preferably $1 \times 10^{-7}$ to $1 \times 10^{-6}$ m. In some embodiments, the thickness of the transparent conductive layer is substantially uniform.

The height (thickness) of the current collector 3 is set according to the size of the photoelectric conversion device and the magnitude of the current that flows. The larger the height (thickness) is, the more the electric resistance can be lowered. This, however, leads to increases in the thicknesses of the sealing layer 10 and the catalyst layer 7. Therefore, an appropriate value exists for the height (thickness) of the current collector 3. The height (thickness) is normally $1 \times 10^{-7}$ to $1 \times 10^{-4}$, preferably $1 \times 10^{-6}$ to $5 \times 10^{-5}$ m.

The thickness of the protective layer 4 is not particularly limited, insofar as the current collectors 3 can be perfectly shielded from the electrolyte layer 6. The thickness is normally $1 \times 10^{-7}$ to $1 \times 10^{-4}$ m, preferably $1 \times 10^{-6}$ to $5 \times 10^{-5}$ m.

The thickness of the oxide semiconductor layer 5 has an optimum value which differs depending on the dye used. The thickness is normally $1 \times 10^{-6}$ to $1 \times 10^{-4}$ m, preferably $5 \times 10^{-6}$ to $5 \times 10^{-5}$ m. In some embodiments, the thickness of the semiconductor layer is substantially uniform.

As for the thickness of the electrolyte layer 6, a smaller value is more preferable for lowering the electric resistance related to ion diffusion. If the electrolyte layer 6 is too thin, however, short circuit would be generated between the oxide semiconductor layer 5 and the catalyst layer 7. Therefore, the thickness of the electrolyte layer 6 as represented by the value of $g$ in FIG. 1B is $1 \times 10^{-7}$ to $1 \times 10^{-4}$ m, preferably $1 \times 10^{-6}$ to $5 \times 10^{-5}$ m, more preferably $5 \times 10^{-6}$ to $2 \times 10^{-5}$ m, and further preferably $9 \times 10^{-6}$ to $1.6 \times 10^{-5}$ m.

As for the thickness of the catalyst layer 7, a larger value is more preferable from the viewpoint of increasing the surface area. If the catalyst layer 7 is too thick, however, the thickness of the sealing layer 10 would be enlarged. The thickness of the catalyst layer 7 is normally $1 \times 10^{-6}$ to $2 \times 10^{-4}$ m, preferably $5 \times 10^{-6}$ to $1 \times 10^{-4}$ m. In some embodiments, the thickness of the catalyst layer is substantially uniform.

The thickness of the counter electrode 8 is not particularly limited, and can be freely selected according to the configuration of the photoelectric conversion device. The thickness is normally $1 \times 10^{-7}$ to $1 \times 10^{-5}$ m, preferably $1 \times 10^{-6}$ to $5 \times 10^{-6}$ m. In some embodiments, the thickness of the counter electrode is substantially uniform.

The thickness of the sealing layer 10 also is not specially restricted, and can be freely selected according to the configuration of the photoelectric conversion device. If the sealing layer 10 is too thick, however, the sealing performance might be deteriorated. The thickness is normally $1 \times 10^{-6}$ to $2 \times 10^{-4}$ m, preferably $1 \times 10^{-5}$ to $1 \times 10^{-4}$ m.

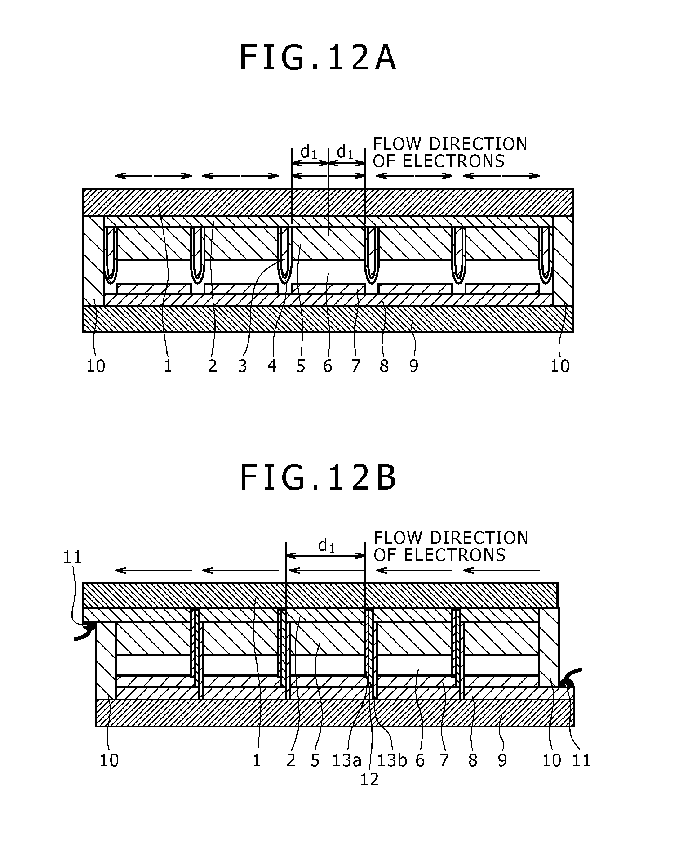

FIG. 12A shows the condition in which electrons flow in the photoelectric conversion device (dye-sensitized solar cell) of Example 1, and FIG. 12B shows the condition in which electrons flow in a photoelectric conversion device having a Z-type module according to Comparative Example 1B.

As shown in FIG. 12B, in Comparative Example 1B, transparent electrode layers 2 and oxide semiconductor layers 5 are patterned in the shape of strips. In addition, counter electrodes 8 and catalyst layers 7 are also patterned in the shape of strips. Besides, an electrolyte layer 6 is disposed between the oxide semiconductor layer 5 and the catalyst layer 7. In this manner, one photoelectric conversion element is formed. Further, a conductive connection layer 12 is provided between the photoelectric conversion element and the photoelectric conversion element, and insulating barrier layers 13a and 13b are formed respectively on both sides of the conductive connection layer 12. The insulating barrier layers 13a and 13b are barrier walls between the photoelectric conversion elements, and serve also as protective layers for the conductive connection layer 12. The photoelectric conversion element has the oxide semiconductor layer 5, the electrolyte layer 6 and the catalyst layer 7 stacked on one another, as above-mentioned. In Comparative Example 1B, the two adjacent photoelectric conversion elements are thus divided by the pair of insulating barrier layers 13a and 13b; the transparent conductor layer 2 of the photoelectric conversion element on one side and the counter electrode 8 of the photoelectric conversion element on the other side are connected in series with each other through the conductive connection layer 12; and electrons flow in one direction in the photoelectric conversion device as a whole.

On the other hand, in the photoelectric conversion device of Example 1, as shown in FIG. 12A, electrons traveling through the transparent conductor layer 2 flow into the current collector 3 formed at the nearest position. Therefore, the maximum travel distance of the electrons is $d_1$+(thickness of protective layer), and this travel distance is approximately one half the distance between the adjacent current collectors 3. On the other hand, in the photoelectric conversion device of Comparative Example 1B shown in FIG. 12B, the maximum travel distance of electrons in one photoelectric conversion element is equal to the distance between the adjacent conductive connection layers 12.

When the oxide semiconductor layer 5 of one photoelectric conversion element has the same width in the photoelectric conversion devices of Example 1 and Comparative Example 1B, the travel distance of electrons in the photoelectric conversion device of Example 1 is about one half the travel distance of electrons in the photoelectric conversion device of Comparative Example 1B. When it is assumed that the resistance loss due to the transparent conductor layer 2 is the same and that the distance between the adjacent conductive connection layers 12 in the photoelectric conversion device of Comparative Example 1B is $d_1$, the resistance loss in the photoelectric conversion device of Example 1 is equal to that in the photoelectric conversion device of Comparative Example 1B if the distance between the adjacent current collectors 3 in the photoelectric conversion device of Example 1 is $2d_1$.

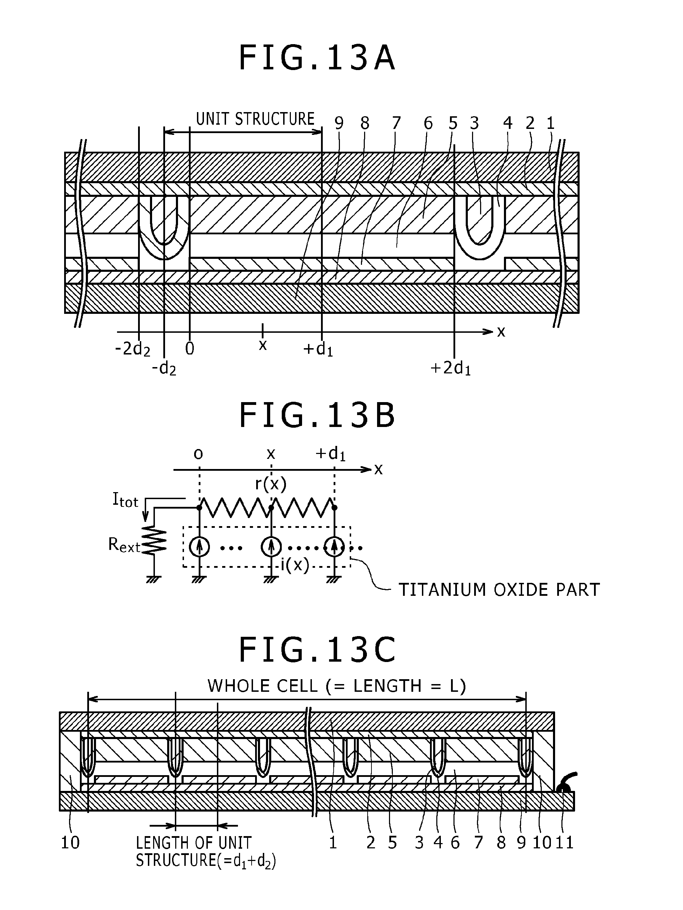

Now, the relation between the photoelectric conversion device of Example 1 and the unit structure thereof and the derivation of an optimum width for the oxide semiconductor layer will be described, based on FIGS. 13A, 13B and 13C. Incidentally, FIG. 13A illustrates the unit structure in the photoelectric conversion device of Example 1, FIG. 13B is an equivalent circuit diagram of a region [0, $d_1$] in the unit structure, and FIG. 13C is an illustration for extending the description of the unit structure to the whole part of the photoelectric conversion device.

As shown in FIG. 13A, the unit structure in the photoelectric conversion device is defined as the region ranging from the center of one current collector 3 to the middle point which is equidistant from the two adjacent current collectors 3, 3. Specifically, when an origin "O" and an x-axis are set as shown in FIG. 13A, the unit structure is the region of length $d_1+d_2$ which is defined by a half region ($-d_2 \leq x \leq 0$) in the width direction of the current collector 3 and an adjacent region ($0 \leq x \leq d_1$) continuous therewith. Here, $d_1$ is the distance from the origin O to the middle point which is equidistant from the two adjacent current collectors 3, 3, and $2 \times d_2$ is the whole width of the protective layer 4. This unit structure corresponds to a half region of the photoelectric conversion element.

The unit structure is analyzed by replacing it with an equivalent circuit shown in FIG. 13B obtained by simplifying the transparent conductor layer 2 and the oxide semiconductor layer 5 into linear (one-dimensional) forms, respectively. Here, the elementary current (A/m) at position $\times$ ($0 \leq x \leq d_1$) of the oxide semiconductor layer 5 is i(x), the linear resistivity ($\Omega$/cm) at position $\times$ ($0 \leq x \leq d_1$) of the transparent conductor layer 2 is r(x), and the total current flowing from the transparent conductor layer 2 into an external load $R_{ext}$ is $I_{tot}$.

Incidentally, as shown in FIG. 13C, the photoelectric conversion device as a whole can be represented by repetition of the above-mentioned unit structure. Therefore, where the overall length of the photoelectric conversion device is "L" as shown in FIG. 13C, the number n of the unit structures contained within the overall length L of the photoelectric conversion device is

n = L/ ($d_1+d_2$) .

Thus, n times the cell output of the unit structure is equal to the total output of the photoelectric conversion device.

An optimum width for the oxide semiconductor layer 5 was determined by a method wherein the intensity of light incident on the transparent conductor layer 2 at position x is represented as I(x), and the cell output of the unit structure on which light with a uniform intensity distribution (namely, I(x)=const.) is incident is computed (simulated) using the width of the oxide semiconductor layer 5 in one photoelectric conversion element as a parameter.

The voltage V(x) at position x of the transparent conductor layer 2 is given by the following formula (1), the Joule heat $P_{loss}$ (x) arising from the elementary current i(x) at position x is given by the following formula (2), and the Joule heat $P_{unit}$ loss generated in the whole part of transparent conductor layer 2 is given by the following formula (3).

$$V(x) = R_{ext} \, I_{tot} + \int_{0}^{x} r(x) \, dx \cdot \int_{x}^{d_1} i(x) \, dx \cdots (1)$$

$$P_{loss}(x) = [V(x) - V(0)] \cdot i(x) = [\int_{0}^{x} r(x) \, dx \cdot \int_{x}^{d_1} i(x) \, dx] \, i(x) \cdots (2)$$

$$P_{unit\ loss} = \int_{0}^{d_1} P_{loss}(x) \, dx = \int_{0}^{d_1} [\int_{0}^{x} r(x) \, dx \cdot \int_{x}^{d_1} i(x) \, dx] \, i(x) \, dx \cdots (3)$$

Let the power generated at position x of the oxide semiconductor layer 5 be $P_{gen}$ (x) , then the power $P_{unit\ gen}$ generated from the whole part of the oxide semiconductor layer 5 constituting the unit structure is given by the following formula (4).

$$P_{unit\ gen} = \int_{0}^{d_1} P_{gen}(x) \, dx \cdots (4)$$

As above-mentioned, the number n of the unit structures contained in the photoelectric conversion device of an overall length L is

$n = L/(d_1+d_2)$ .

Therefore, let L a unit length (= 1), then the effective generated power $P_{cell}$ generated by the photoelectric conversion device as a whole is given by the following formula (5).

$$P_{cell} = n \cdot (P_{unit\ gen}(x) - P_{unit\ loss}(x))$$

$$= (1/(d_1+d_2)) \left\{ \int_0^{d_1} P_{gen}(x)\,dx - \int_0^{d_1} \left[ \int_0^x r(x)\,dx \cdot \int_x^{d_1} i(x)\,dx \right] i(x)\,dx \right\}$$

$$\cdots (5)$$

Accordingly, it suffices to compute $\partial(P_{cell})/\partial(d_1)$ and to determine $d_1$ such that the effective generated power $P_{cell}$ is maximized.

Assuming that light having a uniform intensity distribution is incident on the unit cell,

$r(x) = r$ (Ω/cm) , and

$i(x) = i$ (A/m)

are put into the above formula (5), and the first term in the parentheses { } in the formula (5) is replaced as follows:

$\int P_{gen}(x)\,dx = d_1 \times P_{gen}{}^*$,

and integration is conducted, whereby the following formula (6) can be obtained.

$$P_{cell} = (d_1/(d_1+d_2)) [P_{gen*} - (r(i\,d_1)^2/6)] \cdots (6)$$

In the above formula (6), $d_1/(d_1+d_2)$ represents the term of packing factor (the proportion of the region contributing to power generation, based on the whole region) of the photoelectric conversion element, $Pg_{en*}$ represents the term of generated power, and $r(i\,d_1)^2/6$ represents the term of loss.

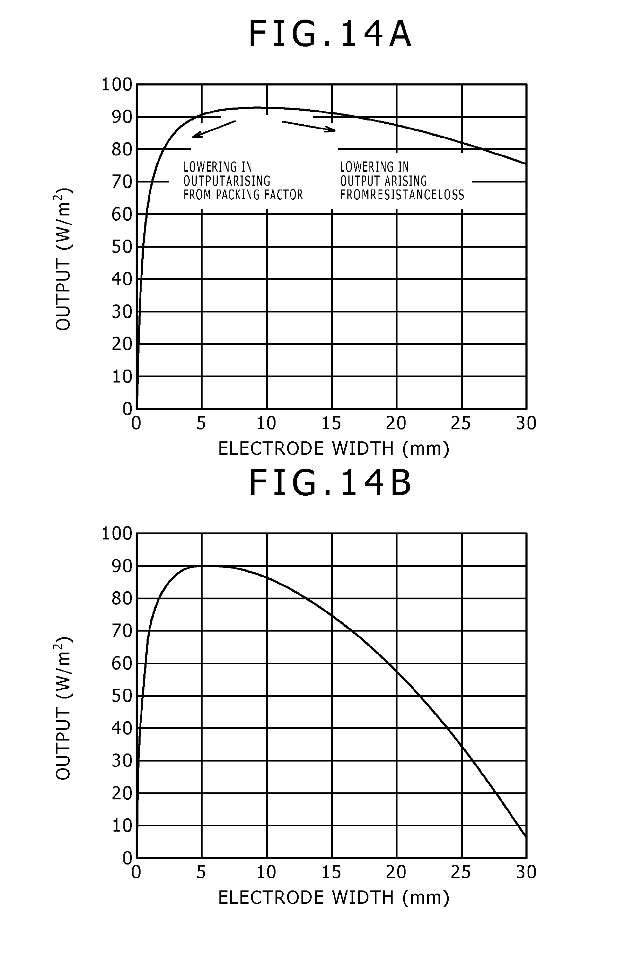

The relation between the width of the oxide semiconductor layer and the output in the photoelectric conversion device of Example 1 is shown in FIG. 14A. In addition, the relation between the width of the oxide semiconductor layer and the output in the photoelectric conversion device having a Z-type module of Comparative Example 1B is shown in FIG. 14B. Incidentally, in FIGS. 14A and 14B, the axis of abscissas represents the width (unit: mm) of the oxide semiconductor layer 5, and the axis of ordinates represents the output (W/m$^2$).

Here, let the width of the oxide semiconductor layer 5 be D, let the linear resistivity of the transparent conductor layer 2 be 10 Ω/cm, let $d_2$ be 0.25 mm, let i (average current in power generation; empirical value) be 250 A/m$^2$, and let $P_{gen*}$ be 100 W/m$^2$, then, since $d_1 = D/2$, the output (W/m$^2$) is given from the formula (6) by:

$$P_{cell} = (D/(D+0.5)\{100-0.02604D^2\}.$$

FIG. 14A shows the output (W/m$^2$) obtained by use of this formula, while using the width D of the oxide semiconductor layer 5 as a parameter.

On the other hand, as for Comparative Example 1B, in the formula (6), let the width of the oxide semiconductor layer 5 be D, let the linear resistivity of the transparent conductor layer 2 be 10 Ω/cm, let $d_2$ be 0.4 mm, let i (average current in power generation; empirical value) be 250 A/m$^2$, and let $P_{gen*}$ be 100 W/m$^2$, then, since $d_1 = D$, the output (W/m$^2$) is given by:

$$P_{cell} = (D/(D+0.4)\{100-0.10417D^2\}.$$

FIG. 14B shows the output (W/m$^2$) obtained by use of this formula, while using the width D of the oxide semiconductor layer 5 as a parameter.

The curve shown in FIG. 14A reaches a maximum at D = 9.6 mm, indicates a lowering in the output arising from a decrease in the packing factor where D < 9.6 mm, and indicates a lowering in the output arising from the electric resistance of the transparent conductor layer 2 where D > 9.6 mm. On the other hand, the curve shown in FIG. 14B reaches a maximum at D ≈ 5.6 mm, indicates a lowering in the output arising from a decrease in the packing factor where D < 5.6 mm, and indicates a lowering in the output arising from the electric resistance of the transparent conductor layer 2 where D > 5.6 mm. As is clear from comparison between the curve shown in FIG. 14A and the curve shown in FIG. 14B, the lowering of the output attendant on an increase in the width D of the oxide semiconductor layer 5 varies gradually in Example 1, but it varies steeply in Comparative Example 1B. In other words, it is clearly seen that, when the photoelectric conversion devices having the same width D are compared with each other, the photoelectric conversion device of Example 1 produces a higher output, as compared with the photoelectric conversion device of Comparative Example 1B.

As has been described above, in the photoelectric conversion device of Example 1, as shown in the formulas (5) and (6), the width D of the oxide semiconductor layer in the array direction of the oxide semiconductor layers 5 formed in an array is so determined that the value obtained by subtracting the power loss generated due to resistance loss in the whole part of the oxide semiconductor layers 5 from the generated power generated in the whole part of the oxide semiconductor layer 5 is maximized, or becomes not less than 90% of the maximum, preferably not less than 95% of the maximum.

Now, the method for manufacturing the photoelectric conversion device of Example 1 will be described below. In the first place, the outline of the manufacturing method will be described as follows.

First, a first base member 1 provided thereon with a transparent conductor layer 2 is prepared. Incidentally, the transparent conductor layer 2 is not formed on outer edge portions of the first base member 1. On the outer edge portions of the first base member 1, a sealing layer 10 will be formed in a later step. Next, oxide semiconductor layers 5 are formed on the transparent conductor layer 2. Then, current collectors 3 are formed on the transparent conductor layers 2. Further, protective layers 4 are formed on the current collectors 3. Thereafter, a dye (photosensitizing dye) is supported on the oxide semiconductor layers 5. On the other hand, catalyst layers 7 are formed on a counter electrode 8 formed on a second base member 9. Next, the second base member 9 is provided at a predetermined position with a pouring port through which to pour (inject) an electrolyte solution. Thereafter, the sealing layer 10 is formed on outer edge portions of the second base member 9. Next, the first base member 1 and the second base member 9 are set to face each other, with the sealing layer 10 sandwiched therebetween, and the sealing layer 10 is cured, to unite the first base member 1 and the second base member 9. Subsequently, the electrolyte solution is poured in through the pouring port formed in the second base member 9, and surplus electrolyte solution around the pouring port is removed, and the pouring port is sealed off.

Specifically, as a first base member 1 in which a transparent conductor layer 2 composed of a 950 nm-thick FTO layer (sheet resistance: 10 Ω/□) is formed on a glass substrate measuring 48 mm × 57 mm and 1.1 mm in thickness, a FTO glass substrate for solar cell made by Nippon Garasu K.K. was used. Those portions of the transparent conductor layer 2 which were located at outer edge portions (the portions to be put into contact with a sealing layer 10) of the first base member 1 were removed by laser etching, and the first base member 1 was subjected to ultrasonic cleaning by use of an alkali-based glass cleaning agent and pure water, followed by sufficient drying.

Then, porous titanium oxide films were formed on the transparent conductor layer 2 as oxide semiconductor layers 5. Specifically, a paste of titanium oxide ($TiO_2$) made by Solaronix was prepared, the paste was applied to the transparent conductor layer 2 by screen printing, to obtain the oxide semiconductor layers 5 shaped as shown in FIG. 5. Incidentally, in forming the oxide semiconductor layers 5, first, a transparent Ti-Nanooxide TSP paste was applied in a thickness of 5 μm onto the transparent conductor layer 2. Next, Ti-Nanooxide DSP containing scattering particles was applied in a thickness of 15 μm onto the Ti-Nanooxie TSP paste layers, to obtain porous titanium oxide films having a film thickness (represented by $H_t$ in FIG. 1B) of 20 μm in total. Then, the porous titanium oxide films were burned in an electric furnace at 510°C for 30 minutes, and were let cool. Thereafter, the porous titanium oxide films were immersed in an aqueous 0.1 mmol/L solution of $TiCl_4$, and held at 70°C for 30 minutes. Then, the porous titanium oxide films were sufficiently washed with pure water and ethanol, followed by drying, and were again burned in an electric furnace at 510°C for 30 minutes.

Next, current collectors 3 made of silver (Ag) were formed on the transparent conductor layer 2. Also, a current collector terminal 3A made of silver (Ag) was formed. Specifically, a silver paste was applied to the transparent conductor layer 2 by screen printing, to obtain the current collectors 3 and the current collector terminal 3A shaped as shown in FIG. 7. The thus applied silver paste was dried sufficiently, and then burned in an electric furnace at 510°C for 30 minutes. The height (represented by $H_a$ in FIG. 1B) of the current collectors 3 after burning was 30 μm.

Next, for shielding and protecting the current collectors 3 from an electrolyte solution, protective layers 4 were formed. Specifically, an epoxy resin for forming the protective layers 4 was applied by screen printing, to obtain the protective layers 4 shaped as shown in FIG. 8. After sufficient leveling of the epoxy resin, the epoxy resin was cured thoroughly by use of a UV spot irradiation apparatus. The total thickness (represented by $H_p$ in FIG. 1B) of the current collector 3 and the protective layer 4, in the condition after the formation of the epoxy resin layer on the surfaces of the current collectors 3, was 50 μm.

Subsequently, a dye was supported on the oxide semiconductor layers 5. Specifically, 0.3 mmol of Z907 dye and 0.075 mmol of n-decylphosphonic acid (DPA) were dissolved in a 1:1 (by volume) mixed solvent of tert-butyl alcohol and acetonitrile, to prepare a dye-containing solution. The oxide semiconductor layers 5 were immersed in the solution at room temperature for 24 hours, to support the dye on the oxide semiconductor layers 5. Thereafter, the oxide semiconductor layers 5 were washed with acetonitrile, followed by drying in a dark place.

On the other hand, as a second base member 9 functioning also as a counter electrode 8, there was used a titanium sheet measuring 48 mm × 57 mm and 0.5 mm in thickness. Then, carbon layers were formed on the second base member 9 as catalyst layers 7. Specifically, a carbon paste containing carbon black and graphite particles together with titanium oxide particulates and ethyl cellulose as binder was prepared. The carbon paste was applied to the second base member 9 by screen printing, to obtain the catalyst layers 7 shaped as shown in FIG. 6. After the catalyst layers 7 were dried sufficiently, the catalyst layers 7 were burned in an electric furnace at 450°C for 30 minutes. The thickness (represented by $H_c$ in FIG. 1B) of the catalyst layers 7 after burning was 50 μm.

Next, the second base member 9 was irradiated with a YAG laser beam, to bore a pouring port of about 0.1 mm in diameter.

Thereafter, a sealing layer 10 was formed on the second base member 9. Specifically, the sealing layer 10 shaped as shown in FIG. 9 was formed by use of a dispenser. Incidentally, the sealing layer 10 was formed to be 1.5 mm in width and about 100 μm in height. Then, the first base member 1 and the second base member 9 were arranged to face each other. The second base member 9 and the first base member 1 were press bonded to each other, with the sealing layer 10 sandwiched therebetween, under a reduced pressure, and the sealing layer 10 was irradiated with UV rays, to achieve tentative adhesion. Subsequently, post-baking was conducted at 70°C for 30 minutes, thereby completely curing the sealing layer 10.

An electrolyte solution (electrolyte composition) to be used for forming an electrolyte layer 6 was prepared as follows. The electrolyte composition was prepared by dissolving 0.045 g of sodium iodide (NaI), 1.11 g of 1-propyl-2,3-dimethylimidazolium iodide, 0.11 g of iodine ($I_2$), and 0.081 g of 4-tert-butylpyridine in 3.0 g of methoxypropylnitrile. Then, the electrolyte solution was injected under a reduced pressure through the pouring port formed in the second base member 9, followed by holding the assembly under a pressure of 0.4 MPa for 20 minutes, to achieve thorough permeation of the electrolyte solution into the space between the first base member 1 and the second base member 9. Thereafter, the electrolyte solution remaining in the vicinity of the pouring port was removed completely, and the pouring port was sealed off by use of a UV-curing resin.

The photoelectric conversion device of Example 1 obtained in this manner is advantageous in that its structure is preferable for being enlarged in area, the internal resistance of the photoelectric conversion device can be reduced, the resistance loss due to the transparent conductor layer and the electrolyte layer can be suppressed, and conversion efficiency can be enhanced.

[Example 2]

In Example 2, which is a modification of Example 1, the relation between photoelectric conversion efficiency and the distance (gap) $g$ between the oxide semiconductor layer and the catalyst layer was examined. In photoelectric conversion devices in Example 2, the distance $g$ between the oxide semiconductor layer 5 and the catalyst layer 7 was variously changed from 2 μm to 86 μm. Further, attendant on the change in the distance g, optimization of other distances and the like in the photoelectric conversion devices was contrived. In such a way, photoelectric conversion devices for tests were fabricated on an experimental basis.

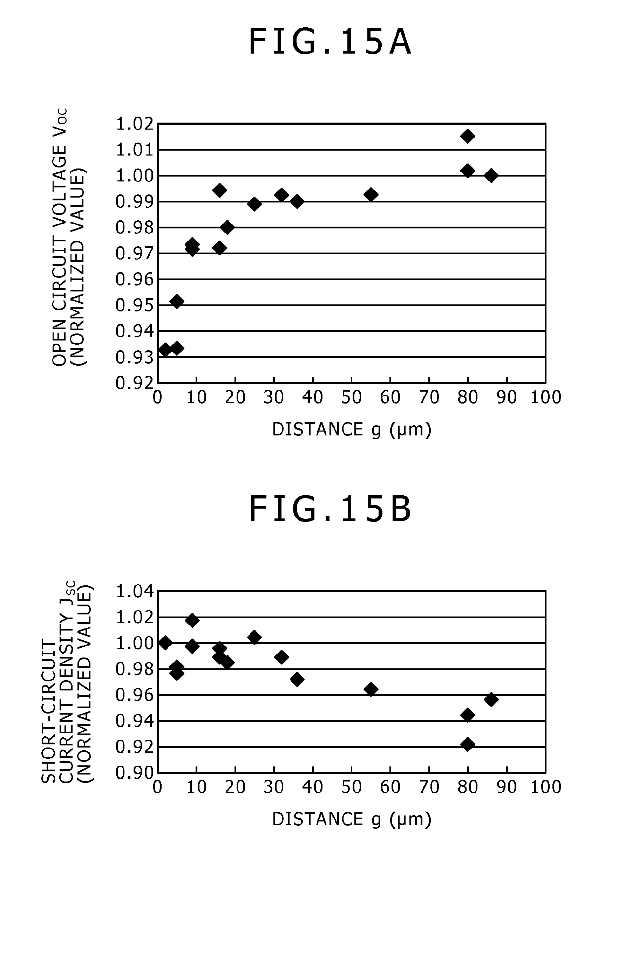

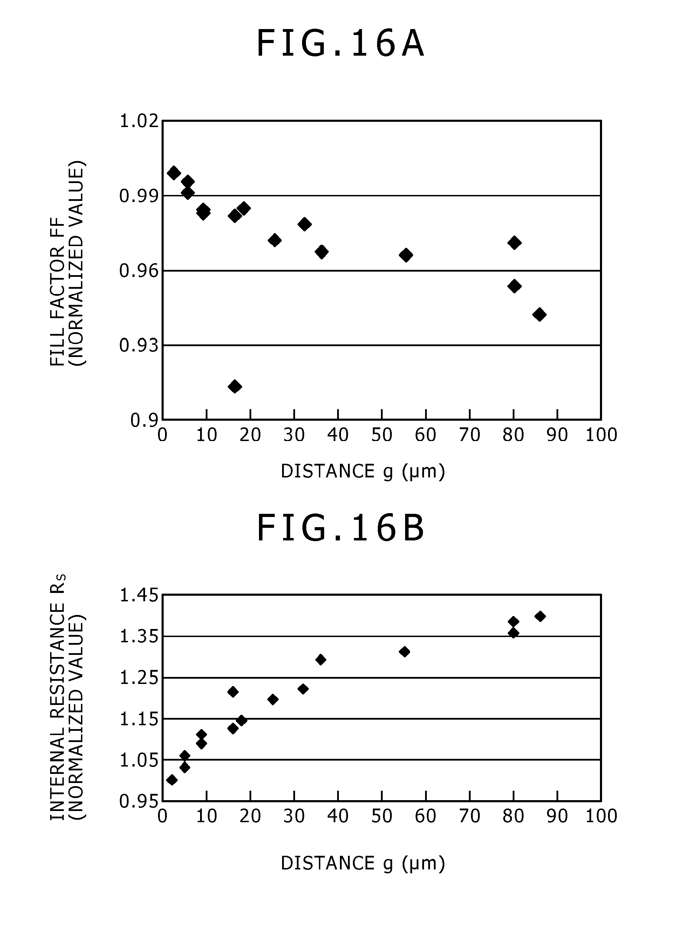

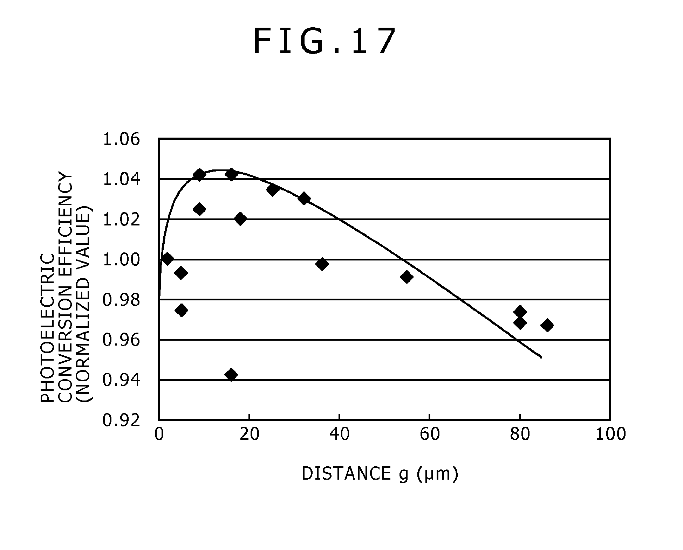

Variations in open circuit voltage $V_{OC}$, short-circuit current density $J_{SC}$, fill factor FF, internal resistance $R_S$, and photoelectric conversion efficiency, with various changes in the distance $g$ between the oxide semiconductor layer and the catalyst layer, are shown in FIGS. 15A, 15B, 16A, 16B, and 17, respectively. In each of FIGS. 15A, 15B, 16A, 16B and 17, the axis of abscissas represents the value (unit: μm) of the distance g. The axis of ordinates in FIG. 15A represents the value of open circuit voltage $V_{OC}$ normalized by taking the value of open circuit voltage $V_{OC}$ when the distance $g$ was 86 μm as "1.00." The axis of ordinates in FIG. 15B represents the value of short-circuit current density $J_{SC}$ normalized by taking the value of short-circuit current density $J_{SC}$ when the distance $g$ was 2 μm as "1.00." The axis of ordinates in FIG. 16A represents the value of fill factor FF normalized by taking the value of fill factor FF when the distance $g$ was 2 μm as "1.00." The axis of ordinates in FIG. 16B represents the value of internal resistance $R_S$ normalized by taking the value of internal resistance $R_S$ when the distance $g$ was 2 μm as "1.00." Further, the axis of ordinates in FIG. 17 represents the value of photoelectric conversion efficiency normalized by taking the value of photoelectric conversion efficiency when the distance $g$ was 2 μm as "1.00."

As a result, the open circuit voltage $V_{OC}$ was gradually lowered as the distance $g$ was shortened, until the distance $g$ was shortened to about 15 μm; when the distance $g$ was shorter than 15 μm, the open circuit voltage $V_{OC}$ was steeply lowered as the distance g was shortened. The reason is supposed to lie in that as the distance g was shortened, the thickness of the electrolyte layer was also reduced in a proportional manner and hence the iodine ion concentration in the beginning stage was lowered, and that micro short circuits were generated. In regard of the short-circuit current density $J_{SC}$, simply, it is considered that the redox reactions of iodine take place more easily as the distance $g$ is shortened. In fact, the value of short-circuit current density $J_{SC}$ increased as the distance $g$ became shorter. Such a phenomenon in which the value of short-circuit current density $J_{SC}$ increases as the distance $g$ becomes shorter has not been known, as far as the present inventors investigated. The value of fill factor FF, also, increased as the distance $g$ was shortened. Further, the internal resistance $R_S$ was also gradually lowered as the distance $g$ was shortened, until the distance $g$ was shortened to about 15 $\mu$m; when the distance $g$ was shorter than 15 $\mu$m, the internal resistance $R_S$ was steeply lowered as the distance $g$ was shortened. This is also presumed to be attributable to generation of micro short circuits. The photoelectric conversion efficiency is represented as a result of synthesis of these tendencies. Attendant on improvements of $J_{SC}$ and FF, the photoelectric conversion efficiency was enhanced as the distance $g$ was shortened. When the distance $g$ was below 5 $\mu$m, however, a lowering in photoelectric conversion efficiency was observed, probably due to a marked lowering in open circuit voltage $V_{OC}$. From these results, it was verified that high performance, particularly, high photoelectric conversion efficiency can be obtained when the distance $g$ is not less than 5 $\mu$m and not more than 20 $\mu$m, preferably not less than 9 $\mu$m and not more than 16 $\mu$m.

While aspects of the present invention have been described above based on preferable Examples, the invention is not limited to the Examples, and various modifications are possible on the basis of the technical thought of the invention. In some cases, high photoelectric conversion efficiency can be obtained with the photoelectric conversion device structured as shown in FIG. 1C, by setting the distance $g$ between the oxide semiconductor layer and the catalyst layer to a value of not less than 5 $\mu$m and not more than 40 $\mu$m, or not less than 5 $\mu$m and not more than 20 $\mu$m, or not less than 9 $\mu$m and not more than 16 $\mu$m. Or, high photoelectric conversion efficiency can also be obtained with a photoelectric conversion device obtained by omitting the current collectors (current collection grid) 3 and the protective layers 4 from the structure shown in FIG. 1C, by setting the distance $g$ between the oxide semiconductor layer and the catalyst layer to a value of not less than 5 $\mu$m and not more than 40 $\mu$m, or not less than 5 $\mu$m and not more than 20 $\mu$m, or not less than 9 $\mu$m and not more than 16 $\mu$m.

The present application contains subject matter related to that disclosed in Japanese Priority Patent Application JP 2010-060887 filed in the Japan Patent Office on March 17, 2010, and Japanese Priority

Patent Application JP 2010-227152 filed in the Japan Patent Office on October 7, 2010.

It should be understood by those skilled in the art that various modifications, combinations, sub-combinations and alterations may occur depending on design requirements and other factors insofar as they are within the scope of the appended claims or the equivalents thereof.

Other aspects and features of the invention are set out in the following numbered clauses:

1. A photoelectric conversion element, comprising:

a catalyst layer having a first portion and a second portion, the first portion being spaced from the second portion; and
a current collector having a tip portion extending toward or within a space between the first and second portions of the catalyst layer.

2. The photoelectric conversion element of clause 1, further comprising a first substrate and a second substrate, the catalyst layer and the current collector disposed between the first and second substrates.

3. The photoelectric conversion element of clause 2, wherein the space between the first and second portions of the catalyst layer is free of catalyst layer.

4. The photoelectric conversion element of clause 1, wherein the first portion and the second portion are disposed in parallel.

5. The photoelectric conversion element of clause 1, wherein a width of the space between the first and second portions of the catalyst layer is greater than a width of the current collector.

6. The photoelectric conversion element of clause 1, further comprising a protective layer surrounding the tip portion of the current collector.

7. The photoelectric conversion element of clause 6, wherein a width of the space between the first and second portions of the catalyst layer is greater than a combined width of a width of the current collector and a width of the protective layer.

8. The photoelectric conversion element of clause 6, wherein a combined width of a width of the current collector and a width of the protective layer is greater than a width of the current collector.

9. The photoelectric conversion element of clause 2, further comprising a semiconductor layer formed on the first substrate.

10. The photoelectric conversion element of clause 9, further comprising a transparent conductor layer and a counter electrode, the catalyst layer and the current collector disposed between the transparent conductor layer and the counter electrode.

11. The photoelectric conversion element of clause 10, further comprising an electrolyte disposed between the current collector and the counter electrode.

12. The photoelectric conversion element of clause 9, wherein the semiconductor layer comprises an porous oxide semiconductor layer.

13. The photoelectric conversion element of clause 9, wherein the semiconductor layer comprises a first portion and a second portion, the first portion of the semiconductor layer being spaced from the second portion.

14. The photoelectric conversion element of clause 13, wherein the first portion and the second portion of the semiconductor layer are disposed in parallel.

15. The photoelectric conversion element of clause 9, further comprising an electrolyte layer disposed between the semiconductor layer and the catalyst layer.

16. The photoelectric conversion element of clause 15, wherein a portion of the current collector is disposed between the first and second portions of the semiconductor layer.

17. The photoelectric conversion element of clause 10, wherein a distance between the transparent conductor layer and the counter electrode is greater than a combined distance defined by a thickness of the semiconductor layer and a thickness of the catalyst layer.

18. The photoelectric conversion element of clause 10, wherein a distance between the transparent conductor layer and the counter electrode is greater than a distance between the transparent conductor layer and an end of the protective layer surrounding the current collector.

19. The photoelectric conversion element of clause 10, wherein a distance between the transparent conductor layer and an end of the protective layer surrounding the current collector is greater than a thickness of the semiconductor layer.

20. The photoelectric conversion element of clause 10, wherein a distance between the transparent conductor layer and an end of the protective layer surrounding the current collector is greater than a combined distance defined by a thickness of the semiconductor layer and a distance between the semiconductor layer and the catalyst layer.

21. The photoelectric conversion element of clause 9, wherein a distance between the semiconductor layer and the catalyst layer ranges between about 5 microns and about 40 microns.

22. The photoelectric conversion element of clause 21, wherein a distance between the semiconductor layer and the catalyst layer ranges between about 5 microns and about 20 microns.

23. The photoelectric conversion element of clause 22, wherein a distance between the semiconductor layer and the catalyst layer ranges between about 9 microns and about 16 microns.

24. The photoelectric conversion element of clause 1, wherein a height of the current collector ranges between about 0.1 microns and about 100 microns.

25. The photoelectric conversion element of clause 9, wherein a thickness of the semiconductor layer ranges between about 1 micron and about 100 microns.

26. The photoelectric conversion element of clause 1, wherein a thickness of the catalyst layer ranges between about 1 micron and about 200 microns.

27. The photoelectric conversion element of clause 2, wherein the second substrate comprises titanium.

28. The photoelectric conversion element of clause 1, wherein the catalyst layer comprises a uniform thickness.

29. The photoelectric conversion element of clause 1, wherein the counter electrode comprises a uniform thickness.

30. The photoelectric conversion element of clause 1, wherein the catalyst layer comprises a third portion spaced from the second portion.

**Claims**

1.  A photoelectric conversion element, comprising:

    a catalyst layer having a first portion and a second portion, the first portion being spaced from the second portion; and
    a current collector having a tip portion extending toward or within a space between the first and second portions of the catalyst layer.

2.  The photoelectric conversion element of claim 1, further comprising a first substrate and a second substrate, the catalyst layer and the current collector disposed between the first and second substrates.

3.  The photoelectric conversion element of claim 2, wherein the space between the first and second portions of the catalyst layer is free of catalyst layer.

4.  The photoelectric conversion element of claim 1, wherein the first portion and the second portion are disposed in parallel.

5.  The photoelectric conversion element of claim 1, wherein a width of the space between the first and second portions of the catalyst layer is greater than a width of the current collector.

6.  The photoelectric conversion element of claim 1, comprising a protective layer surrounding the tip portion of the current collector, and wherein a width of the space between the first and second portions of the catalyst layer is greater than a combined width of a width of the current collector and a width of the protective layer.

7.  The photoelectric conversion element of claim 2, further comprising:

    a semiconductor layer formed on the first substrate;
    a transparent conductor layer and a counter electrode, the catalyst layer and the current collector being disposed between the transparent conductor layer and the counter electrode; and
    an electrolyte disposed between the current collector and the counter electrode.

8.  The photoelectric conversion element of claim 2, comprising:

    a semiconductor layer formed on the first substrate; and
    an electrolyte layer disposed between the semiconductor layer and the catalyst layer;
    and wherein a portion of the current collector is disposed between the first and second portions of the semiconductor layer.

9.  The photoelectric conversion element of claim 2, comprising:

    a semiconductor layer formed on the first substrate; and
    a transparent conductor layer and a counter electrode, the catalyst layer and the current collector being disposed between the transparent conductor layer and the counter electrode;
    and wherein a distance between the transparent conductor layer and the counter electrode is greater than a distance between the transparent conductor layer and an end of the protective layer surrounding the current collector.

10. The photoelectric conversion element of claim 2, comprising: a semiconductor layer formed on the first substrate; and wherein a distance between the semiconductor layer and the catalyst layer ranges between about 5 microns and about 40 microns.

11. The photoelectric conversion element of claim 10, wherein a distance between the semiconductor layer and the catalyst layer ranges between about 5 microns and about 20 microns.

12. The photoelectric conversion element of claim 11, wherein a distance between the semiconductor layer and the catalyst layer ranges between about 9 microns and about 16 microns.

13. The photoelectric conversion element of claim 1, wherein the catalyst layer comprises a uniform thickness.

14. The photoelectric conversion element of claim 1, wherein the counter electrode comprises a uniform thickness.

# FIG.1A

# FIG.1B

# FIG.1C

# F I G . 2

PROJECTION OF LAYER PATTERNS
ONTO SUBSTRATE

FIG.3A

FIG.3B

# FIG.4A

# FIG.4B

# FIG.4C

# F I G . 5

# FIG.6

# F I G . 7

# FIG.8

# F I G . 9

PROJECTION OF LAYER PATTERNS
ONTO SUBSTRATE

FIG.10A

FIG.10B

# FIG.11

# FIG.12A

FLOW DIRECTION
OF ELECTRONS

$d_1$  $d_1$

10  1  2  3  4  5  6  7  8  9  10

# FIG.12B

FLOW DIRECTION
OF ELECTRONS

$d_1$

11

10  1  2  5  13a  13b  6  7  8  9  10  11
12

# FIG.13A

UNIT STRUCTURE  9  8  7  6  5  3  4  2  1

-2d₂  0  x  +d₁  +2d₁
-d₂

x

# FIG.13B

o  x  +d₁
x

r(x)

$I_{tot}$

$R_{ext}$

-i(x)

TITANIUM OXIDE PART

# FIG.13C

WHOLE CELL (= LENGTH = L)

10  LENGTH OF UNIT  1  2  5  3  4  6  7  8  9  10 11
STRUCTURE(=d₁+d₂)

# FIG.14A

LOWERING IN OUTPUTARISING FROM PACKING FACTOR

LOWERING IN OUTPUT ARISING FROMRESISTANCELOSS

# FIG.14B

# FIG.15A

# FIG.15B

# FIG.16A

# FIG.16B

# FIG.17

## REFERENCES CITED IN THE DESCRIPTION

**Patent documents cited in the description**

- JP 2005142089 A
- JP 2006092854 A
- JP 2007280906 A
- JP 2009277624 A
- JP 2005346971 A
- JP 2009009866 A
- JP 2010060887 A
- JP 2010227152 A